(19) Europäisches Patentamt / European Patent Office / Office européen des brevets

(11) **EP 3 801 014 B1**

(12) **EUROPEAN PATENT SPECIFICATION**

(45) Date of publication and mention of the grant of the patent: **27.08.2025 Bulletin 2025/35**

(21) Application number: **19727328.7**

(22) Date of filing: **22.05.2019**

(51) International Patent Classification (IPC): ***A01N 25/04*** *(2006.01)*

(52) Cooperative Patent Classification (CPC): (C-Sets available) **A01N 25/04** (Cont.)

(86) International application number: **PCT/EP2019/063268**

(87) International publication number: **WO 2019/224280 (28.11.2019 Gazette 2019/48)**

(54) **AGROCHEMICAL FORMULATIONS CONTAINING A POLYMERIC CRYSTAL GROWTH INHIBITOR**

AGROCHEMISCHE FORMULIERUNGEN MIT EINEM POLYMERISCHEN KRISTALLWACHSTUMSHEMMER

FORMULATIONS AGROCHIMIQUES CONTENANT UN INHIBITEUR POLYMÉRIQUE DE CROISSANCE DE CRISTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2018 US 201862676518 P**
**06.11.2018 EP 18204757**

(43) Date of publication of application: **14.04.2021 Bulletin 2021/15**

(73) Proprietor: **Bayer Aktiengesellschaft**
**51373 Leverkusen (DE)**

(72) Inventors:
- **SINGH, Milind**
  **Apex, NC 27502 (US)**
- **DAS, Anjan**
  **Cary, NC 27519 (US)**
- **ROSA, Fred**
  **Wake Forest, NC 27587 (US)**
- **HANSON, William**
  **Wentzville, MO 63385 (US)**
- **FAERS, Malcolm**
  **40597 Düsseldorf (DE)**

(74) Representative: **BIP Patents**
**c/o Bayer Intellectual Property GmbH**
**Alfred-Nobel-Straße 50**
**40789 Monheim am Rhein (DE)**

(56) References cited:
**EP-A1- 3 292 759** **WO-A1-2012/122274**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 25/04, A01N 43/40, A01N 43/56**

## Description

The invention provides agrochemical compositions that include a pesticidally active ingredient that exhibits reduced crystal growth and methods for producing the same. The disclosure further provides methods of controlling, reducing, or eliminating pests in a plant or crop.

## BACKGROUND

There is an ongoing need to develop effective pesticidal formulations, such as herbicidal, fungicidal, insecticidal, herbicidal, and nematicidal formulations, which exhibit desired characteristics, including having improved storage stability and shelf life.

Storage stability of agrochemical compositions can be adversely affected by numerous chemical phenomena, including by a process known as "Ostwald ripening" or crystal growth.

Ostwald ripening is a phenomenon observed in solid solutions and colloid suspensions in which inhomogeneous structure changes over time. During Ostwald ripening, small crystals or suspending particles dissolve and then redeposit onto larger crystals or particles. This process is thermodynamically favored, and thus spontaneous, because molecules on the surface of a particle are energetically less stable than molecules in the interior. In other words, a mass transfer occurs from smaller solute particles having higher interfacial energy to larger solute particles having lower interfacial energy.

Crystal growth of compounds, including agriculturally active compounds in agrochemical, such as pesticidal, compositions can result in undesirable properties. For example, a lack of efficacy of the pesticide, a need for increased dosage of the pesticide, non-optimal concentrations of the active in the formulation, decreased shelf-life of the formulation, and/or blockages in filters and nozzles used for application when the formulation is applied.

Crystal growth can occur by either of two mechanisms: (1) slow diffusion, and/or (2) slow attachment. The rate of crystal/particle growth is determined by the slower process.

The following equation describes the growth of the average particle radius as a result of diffusion (that is, when diffusion occurs more slowly than detachment and attachment):

$$\langle R\rangle^3 - \langle R\rangle_0^3 = \frac{8\gamma c_\infty v^2 D}{9R_gT}t$$

where

(R) represents the average radius of all the particles (e.g., crystals) in a solution;
$\gamma$ represents the particle surface tension or surface energy;
$c_\infty$ represents the solubility of the particle material;
v represents the molar volume of the particle material;
D represents the diffusion coefficient of the particle material;
$R_g$ represents the ideal gas constant;
$T$ represents the absolute temperature; and
$t$ represents time.

The following equation describes the growth of the average particle radius as a result of detachment and attachment (that is, when detachment/attachment occurs more slowly than diffusion):

$$\langle R\rangle^2 = \frac{64\gamma c_\infty v^2 k_s}{81R_gT}t$$

where $k_s$ is the reaction rate constant of attachments, with units of length per time.

Effective formulations minimize both $c_\infty$ and $k_s$.

Because average radius can generally be measured in experiments, it can be fairly easy to determine whether a system is obeying the slow-diffusion equation or the slow-attachment equation. However, if experimental data obeys neither equation, then it is likely that another mechanism is taking place and Ostwald ripening is not occurring.

For references in the relation to Ostwald ripening theories, see Lifshitz, I.M.; Slyozov, V.V. (1961). "The Kinetics of Precipitation from Supersaturated Solid Solutions". Journal of Physics and Chemistry of Solids. 19 (1-2): 35-50 and Baldan, A. (2002). "Review Progress in Ostwald ripening theories and their applications to nickel-base superalloys Part I:

Ostwald ripening theories". Journal of Materials Science. 37 (11): 2171-2202.

A common example of Ostwald ripening is the recrystallization of water within ice cream, resulting in a coarser texture. Larger ice crystals grow while smaller ice crystals decrease in number.

Additionally, Ostwald ripening can be accelerated by temperature cycling.

There is a need to provide formulations of agriculturally active ingredients that do not undergo Ostwald ripening or have reduced or slower occurrence of this phenomenon. There is also an ongoing need to increase shelf life of agricultural formulations. EP3292759 uses polyalkylene oxide block copolymer against Ostwald ripening of fluopyram.

## SUMMARY

In pesticidal and other agrochemical compositions such as suspensions, crystal growth of the active ingredient can result in a thicker, more viscous composition. Ostwald ripening thus renders these compositions less effective and more difficult to apply to, for example, plants, plant parts, or habitats thereof. The inhomogenous distribution of the active ingredient in the compositions may lead to varying concentrations of the active ingredient when applied or insoluble residues and thereby to inconsistent efficacies as well to problems in dispersing the compositions in water for applications.

In fluopyram suspension concentrate formulations, for example, long, needle-like crystals have been observed, resulting in solidification of the suspension concentrate formulations during shelf storage concentrations.

The present inventors have surprisingly found that certain polymers, including cellulose polymers and polymeric surfactants minimize crystal growth in agrochemical compositions, such as pesticidal compositions.

The present invention provides for a composition comprising at least one succinate dehydrogenase inhibitor being fluopyram or isoflucypram and at least one polymeric crystal growth inhibitor being a cellulose ether.

It has been found that compositions comprising at least one succinate dehydrogenase inhibitor and at least one polymeric crystal growth inhibitor can demonstrate unexpected properties of reduced crystal growth of the succinate dehydrogenase inhibitor while maintaining pesticidal, such as fungicidal or nematicidal, activity.

The disclosure further provides for a method of controlling or reducing pests, including nematodes, insects, and fungal spores in a plant or crop comprising applying to a plant or habitat thereof a composition comprising at least one succinate dehydrogenase inhibitor and at least one polymeric crystal growth inhibitor.

The disclosure further provides for a method of controlling crystal growth comprising adding a polymeric crystal growth inhibitor to a composition comprising a succinate dehydrogenase inhibitor.

Further objects, features, and advantages of the invention will become apparent from the detailed description that follows.

## BRIEF DESCRIPTION OF THE DRAWINGS

The patent or application file contains at least one drawing executed in color. Copies of this patent or patent application publication with color drawing(s) will be provided by the Office upon request and payment of the necessary fee.

FIG. 1 depicts the effect of polymeric crystal growth inhibitor on active ingredient while suspended in water. The top row displays active ingredient crystal suspended in water and their growth over different storage periods. The middle row displays the effect of inclusion of Rhodoline 111 (3% w/w) on crystal growth phenomenon, and the bottom row indicates the effect of inclusion of HPMC (Hydroxy propyl methyl cellulose) (0.2% w/w) on crystal growth phenomenon during storage.

## DETAILED DESCRIPTION

Applicants have now found that agrochemical compositions of the present invention exhibit reduced crystal growth thereby increasing shelf life of the compositions, while also effectively controlling plant pests, such as insects, nematodes, and fungus and fungal spores.

"Controlling" denotes a preventive, treatment, or curative reduction of the damage in comparison to the untreated plant, more preferably the infestation is essentially repelled, most preferably the fungal, insects, and/or nematode infestation is totally suppressed. The application of the composition can be applied preventatively before fungal, insects or nematode, infestation and/or after infestation to cure or control infestation.

"Fungus" should be understood as meaning all species of fungi, as well as all fungus-like organisms, including oomycetes.

"Fungal spores" should be understood as meaning all spores produced by all species of fungi and fungus-like organisms, including oomycetes.

"Crystal growth" should be understood as meaning an increase in crystal or particle size in a fungicidal or other agrochemical composition, brought on as a result of Ostwald ripening or other phenomena.

The term "crystal growth inhibitor" should be understood as meaning a polymeric agent or additive capable of

reducing or eliminating crystal growth.

In an embodiment, agrochemical compositions of the present invention comprise fluopyram.

Fluopyram's International Union of Pure and Applied Chemistry (IUPAC) name is N-[2-[3-chloro-5-(trifluoromethyl)pyridin-2-yl]ethyl]-2-(trifluoromethyl)benzamide. Fluopyram is written chemically as $C_{16}H_{11}ClF_6N_2O$.

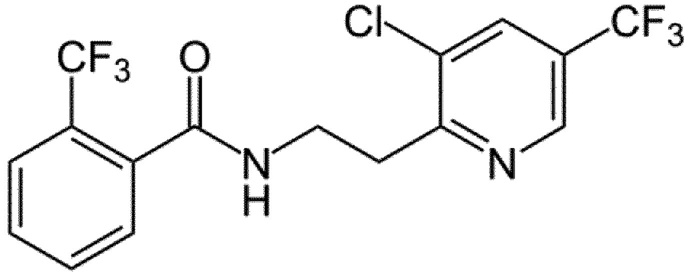

Fluopyram is a fungicidal and nematicidal benzamide compound characterized as a succinate dehydrogenase inhibitor ("SDHI"), belonging to Fungicide Resistance Action Committee ("FRAC") Mode of Action group C, FRAC code 7 (see: www.frac.info/docs/default-source/publications/frac-code-list/frac-code-list-2017-final.pdf). Specifically, fluopyram is a pyridinyl-ethyl-benzamide.

In another embodiment, agrochemical compositions of the present invention comprise isoflucypram.

The compound isoflucypram is a fungicide from Bayer CropScience AG, the name for which was approved in March 2017 by the International Organization for Standardization ("ISO") Technical Committee ISO/TC 81 for common names for pesticides and other agrochemicals.

Isoflucypram's International Union of Pure and Applied Chemistry (IUPAC) name is N-(5-chloro-2-isopropylbenzyl)-N-cyclopropyl-3-(difluoromethyl)-5-fluoro-1-methyl-1H-pyrazole-4-carboxamide. Isoflucypram is written chemically as $C_{19}H_{21}ClF_3N_3O$.

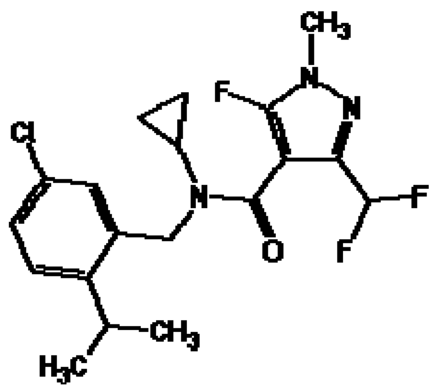

Isoflucypram is a pyrazole compound, specifically a pyrazole-4-carboxamide. Isoflucypram is thus characterized as a SDHI, belonging to FRAC Mode of Action group C, FRAC code 7.

In another embodiment, agrochemical compositions of the present invention comprise fluopyram and/or isoflucypram.

In another embodiment, agrochemical compositions of the present invention comprise fluopyram.

In another embodiment, agrochemical compositions of the present invention comprise isoflucypram.

Agrochemical compositions of the present invention comprise, in addition to a pesticidal, such as fungicidal compound such as discussed above, at least one polymeric crystal growth inhibitor, of which at least a cellulose ether.

In an aspect, the polymeric crystal growth inhibitor is an organic or inorganic polymer. In an aspect, the polymeric crystal growth inhibitor is a natural polymer, such as a cellulose, or a synthetic polymer, such as a polyacrylate. Other polymers that could be used include polyvinylpyrrolidone (PVP), polyvinyl acetate (PVA), PVA-PVP copolymers, polyethylene glycol (PEG), other film forming polymers including polystyrene, styrenebutadiene, and other styrene copolymers and terpolymers.

The polymeric crystal growth inhibitor is a cellulose ether. In a further embodiment, the polymeric crystal growth inhibitor is the cellulose ether hydroxypropyl methylcellulose (also known as "hypromellose" or "HPMC"). In a further embodiment, the polymeric crystal growth inhibitor is the cellulose ether methylcellulose. In a further embodiment, the polymeric crystal growth inhibitor is the cellulose ether sodium carboxymethyl cellulose. In another embodiment more than one cellulose ether may be used.

Any known cellulose ether can be used as a crystal growth inhibitor of the present invention. Cellulose ethers are generally known compounds that are commercially available, for example, as Methocel® from Dow Chemical Company, or as Culminal® from Hercules or Walocel® from Dow/Dupont Chemical Company. They may be prepared by etherification of the polysaccharide cellulose. The manufacturing process may be carried out in either one of several steps. The reactions usually taking place are alkalization and alkylation. These reactions can be carried out in the presence or absence of solvents. Pure cellulose has large crystalline regions due to hydrogen- bonded hydroxyl groups and is thus insoluble in water and in most organic solvents. In the first step of cellulose ether manufacturing, cellulose may be activated with sodium hydroxide to become alkali cellulose. In some processes, alkali cellulose is degraded oxidatively much more rapidly than cellulose. Controlled reduction of the degree of polymerization allows for adjustment of the solution viscosities of the final products. By the selection of the substituent, the type of cellulose ether is determined. Mixed ethers can be produced with a mixture of reactants or by stepwise addition of the substituents. This reaction step may be carried out under pressure and at increased temperature. Alkylation may be carried out with alkyl halides. With epoxides, the process is called alkoxylation. As with all polymer reactions, this reaction may not occur uniformly along the polymer chain.

The cellulose ether can be methylhydroxyethyl cellulose or hydroxypropyl methylcellulose. In an aspect, the cellulose ether is hydroxypropyl methylcellulose. The cellulose ether may have solubility in water at 20 °C of at least 3 g/l, preferably of at least 10 g/l, and in particular of at least 20 g/l. The molecular weight of cellulose ether is usually determined by kinematic or dynamic viscosity. Viscosity is measured as mPa·s which is millipascal per second or centipoise (cP). Lower viscosities mean typically lower molecular weight of the cellulose ether. The cellulose ether may have a kinematic viscosity of up to 500 mPa·s, preferably of up to 50 mPa·s, more preferably up to 10 mPa·s, and in particular of up to 5 mPa·s at 20 °C. Inone embodiment the cellulose ether have a viscosity between 1 and 300 000, between 3 and 254 000 cp, between 15 and 250 000 cP, between 15 and 100 000 cP, between 15 and 40 000 cP, between 15 and 400 cP or between 15 and 1500 cP.

The cellulose ether may have a dynamic viscosity of up to 500 mPa·s, preferably of up to 50 mPa·s, more preferably up to 10mPa·s, and in particular of up to 5 mPa·s at 20 °C. The dynamic viscosity may be determined according to a rotational shear rheometer at a shear rate of 10- $s^{-1}$ at 20 °C with a 2 wt% (cellulose ether with 5% humidity) aqueous solution. The cellulose ether may have a dynamic viscosity of up to 200 mPa·s, preferably of up to 100 mPa·s, more preferably up to 40 mPa·s, and in particular of up to 20 mPa·s at a shear rate of 20 $s^{-1}$ and a temperature of 20 °C. The cellulose ether may contain 15 to 40 wt%, preferably 22 to 35 wt%, and in particular 26 to 32 wt% methoxy groups. The cellulose ether may contain 3 to 30 wt%, preferably 4 to 20 wt%, and in particular 5 to 14 wt% hydroxyethoxy or hydroxypropoxy groups. The composition can comprise 1 to 100 g/l, preferably 4 to 50 g/l, and in particular 5 to 30 g/l of the cellulose ether.

In certain embodiments, the cellulose ether is, Methocel® K200M Premium Hydroxypropyl Methylcellulose from Dow Chemical Company with a viscosity of 12-18 mPa·s (see, for example, colorcon.com/jp/products-formulation/all-products/download/777/2549/34?method=view). In another embodiment, the cellulose ether is Methocel E15 Premium from Dow Chemical Company with, for example, a viscosity of 150,000-280,000 mPa·s (see, for example, dow.com/en-us/products/METHOCELPremium#sort=%40gtitle%20ascending). In another embodiment examples for cellulose ethers are as follows: Methocel A40 M is a commercially available methyl cellulose ether which has a viscosity of 40 000 cP (centipoise) as a 2% (w/w) aequous solution, provided by Dow Chemical Company. Methocel K200 M is a commercially available hydroxypropyl cellulose ether which has a viscosity of 200 000 cP (centipoise) as a 2% (w/w) aequous solution, provided by Dow Chemical Company. Methocel K200 M is a commercially available hydroxypropyl cellulose ether which has a viscosity of 200 000 cP (centipoise) as a 2% (w/w) aequous solution, provided by Dow Chemical Company. Methocel K250 M is a commercially available hydroxypropyl cellulose ether which has a viscosity of 250 000 cP (centipoise) as a 2% (w/w) aequous solution, provided by Dow Chemical Company. Methocel E15 Premium LV is a commercially available hydroxypropylmethyl cellulose ether which has a viscosity of 15 cP (centipoise) as a 2% (w/w) aequous solution, provided by Dow Chemical Company. Methocel Methocel E3 Premium LV is a commercially available hydroxypropylmethyl cellulose ether which has a viscosity of 3 cP (centipoise) as a 2% (w/w) aequous solution, provided by Dow Chemical Company. Methocel K254 HPMC is a commercially available hydroxypropylmethyl cellulose ether which has a viscosity of 254 000 cP (centipoise) as a 2% (w/w) aqueous solution, provided by Dow Chemical Company. Methocel A15 C is a commercially available methyl cellulose ether which has a viscosity of 1500 cP (centipoise) as a 2% (w/w) aequous solution, provided by Dow Chemical Company. A4 M is a commercially available methyl cellulose ether which has a viscosity of 4000 cP (centipoise) as a 2% (w/w) aequous solution, provided by Dow Chemical Company.

In an embodiment, the polymeric crystal growth inhibitor can further include is a polymeric surfactant or a combination of polymeric surfactants. Suitable polymeric surfactants include, for example, polycarboxylates, acrylic copolymers, fatty alcohol ethoxylate, castor-oil based ethoxylates, fatty acid ethoxylates, EO-PO block copolymers (i.e., poloxamers), sorbitan(ol) ester ethoxylates, lanolin alcohol ethoxylates, polyol esters, lanolin alcohols, oleine/oleic fatty acids, vegetable and tallow fatty acids, and lanolin fatty acids. Examples of polymeric surfactants also include homo- or copolymers of vinylpyrrolidone, vinylalcohols, or vinylacetate.

The polymeric crystal growth inhibitors, such as polymeric surfactants, can be used in combination with other

excipients, including non-ionic or anionic non-polymeric surfactants. Such optional excipients may assist with crystal growth inhibition, or improve other features of the formulation, such as stability, dust mitigation, flowability and/or rain fastness. Suitable surfactants that can be used as additional excipients or as polymeric crystal growth inhibitors if polymeric include surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.). Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates. Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Polycarboxylic acid is a known polymer, which is commercially available as, for example, Solvay Geropon® T/36, or Solvay Rhodoline® 111.

In another embodiment, a composition described herein comprises both a cellulose ether and a polycarboxylate (*i.e.*, polycarboxylic acid) as polymeric crystal growth inhibitors. In yet another embodiment, a composition described herein comprises HPMC and a polycarboxylate as polymeric crystal growth inhibitors.

In another embodiment, a composition disclosed herein comprises both a cellulose ether and an acrylic copolymer solution as polymeric crystal growth inhibitors. In yet another embodiment, a composition disclosed herein comprises HPMC and an acrylic copolymer solution, such as Atlox™ 4913, as polymeric crystal growth inhibitors.

In another embodiment, a composition disclosed herein comprises a cellulose ether, a polycarboxylate (*i.e.*, polycarboxylic acid), and an acrylic copolymer solution as polymeric crystal growth inhibitors. In yet another embodiment, a composition described herein comprises HPMC, polycarboxylate, and an acrylic copolymer solution, such as Atlox™ 4913, as polymeric crystal growth inhibitors.

In an embodiment, a composition disclosed herein comprises HPMC and polycarboxylate in a weight ratio HPMC:polycarboxylate of between 1:200 and 100:1, or between 1:175 and 75:1,or between 1:175 and 50:1, or between 1:150 and 50:1, or between 1:150 and 20:1, or between 1:150 and 10:1, or between 1:125 and 1:1 or between 1:20 and 1:1.

In an aspect, the at least one SDHI is present at a total w/w concentration of 1% to 99%, or 5 % to 90%, or 10 % to 99%, or 5% to 80%, or 10% to 80%, or 10% to 70%, or 20% to 80%, or 20% to 70%, or 15% to 65%, or 15 % to 60%, or 30% to 65%, or 15% to 55% by weight of the composition.

In an embodiment, the disclosure provides for concentrate formulations comprising fluopyram at a total w/w concentration of 1% to 99%, or 5 % to 90%, or 10 % to 99%, or 5% to 80%, or 10% to 80%, or 10% to 70%, or 20% to 80%, or 20% to 70%, or 15% to 65%, or 15 % to 60%, or 30% to 65%, or 15% to 55% by weight of the composition.

In another embodiment, the disclosure provides for ready-to-use formulations comprising fluopyram at a total concentration of from 50 g/L to 1,500 g/L, or from 100 g/L to 1,000 g/L, or from 250 g/L to 800 g/L.

In an embodiment, the disclosure provides for concentrate formulations comprising isoflucypram at a total w/w concentration of 1% to 99%, or 5 % to 90%, or 10% to 99%, or 5% to 80%, or 5% to 75%, or 10% to 80%, or 10% to 70%, or 20% to 80%, or 20% to 70%, or 15% to 65%, or 15 % to 60%, or 30% to 65%, or 10% to 60%, or 15% to 55% by weight of the composition.

In another embodiment, the disclosure provides for ready-to-use formulations comprising isoflucypram at a total concentration of from 25 g/L to 1,000 g/L, or from 50 g/L to 800 g/L or from 100 g/L to 750 g/L.

In an aspect, the disclosure provides for compositions wherein crystal growth is inhibited such that the compositions are not gelled and remain free flowing at least 7 days, or at least 14 days, or at least 21 days or at least

28 days, or at least 35 days after manufacture at elevated storage temp (such 40C, 45C and/or 54C). In another aspect, the formulation should be stable and remain free flowing at least 6 months, or at least 1 year, or at least 2 years after manufacture under ambient storage conditions or room temperature.

In an aspect, agrochemical compositions of the present invention may comprise a thickener selected from inorganic clays or polysaccharides which are different from the cellulose ether. Examples are xanthan gum, kaolin.

In an aspect, an agrochemical composition of the present invention does not gel within seven days at elevated storage temp (such 40°C, 45°C and/or 54°C). Preferably, an agrochemical composition of the present invention does not gel within 18 days at elevated storage temp (such 40°C, 45°C and/or 54°C). More preferably, an agrochemical composition of the present invention does not gel for at least 34 days and remains fee flowing at elevated storage temp (such 40°C, 45°C and/or 54°C).

In an aspect, an agrochemical composition of the present invention contains crystals of 150 microns (μm) or larger in an amount of no more than about 0.05% by mass, based on the total mass of the composition after a week of aging at 70°C. In another aspect, an agrochemical composition of the present invention contains crystals of 150 microns or larger in an amount of no more than about 0.01% by mass, based on the total mass of the composition after a week of aging at 70°C.

In an aspect, an agrochemical composition of the present invention contains crystals of 25 microns or larger in an amount of no more than about 0.5% by mass, based on the total mass of the composition after a week of aging at 70°C. In another aspect, an agrochemical composition of the present invention contains crystals of 25 microns or larger in an amount of no more than about 0.1% by mass, based on the total mass of the composition after a week of aging at 70°C.

In an aspect, the disclosure provides for compositions whose shelf-lives can extend to beyond 2 years or beyond 3 years or beyond five years without exhibiting significant crystal growth or sediment accumulation, and which maintain free flow.

In an aspect, the disclosure provides for compositions comprising at least one polymeric crystal growth inhibitor, wherein the at least one polymeric crystal growth inhibitor is present at a total w/w concentration of from 0.001% to 33%, or from 0.005% to 20%, or from 0.01% to 15% or from 0.04 to 7.5%, or from 0.1% to 5%. Amend other concentrations

In an aspect, the disclosure provides for compositions comprising at least one SDHI and at least one polymeric crystal growth inhibitor, wherein the at least one SDHI and the at least one polymeric crystal growth inhibitor are present in a weight ratio of from 1:1000 to 1000:1, or from 1:500 to 500:1, or from 1:100 to 100:1, or from 1:50 to 50:1.

In another aspect, the disclosure provides for a method of preventing, reducing, or eliminating crystal growth in a composition, such as a composition comprising one or more SDHIs as active ingredient(s), wherein at least one polymeric crystal growth inhibitor is added to the composition.

The SDHI inhibitor(s) are fluopyram and/or isoflucypram.

In an embodiment, the polymeric crystal growth inhibitor(s) to be added is/are one or more cellulose ethers.

In an embodiment, the polymeric crystal growth inhibitor(s) to be added is/are hydroxypropyl methylcellulose.

In an embodiment, the composition of the present invention comprises fluopyram and hydroxypropyl methylcellulose.

In an embodiment, the composition of the present invention comprises fluopyram, hydroxypropyl methylcellulose, and polycarboxylic acid salt.

In an embodiment, the composition of the present invention comprises isoflucypram and hydroxypropyl methylcellulose.

In an embodiment, the composition of the present invention comprises isoflucypram and methylcellulose.

In an embodiment, the composition of the present invention comprises isoflucypram and sodium carboxymethyl cellulose.

In an embodiment, the composition of the present invention comprises isoflucypram, hydroxypropyl methylcellulose and polycarboxylic acid salt.

In yet another aspect, the disclosure provides for a method wherein a composition comprising at least one SDHI and at least one polymeric crystal growth inhibitor is applied to a plant or habitat thereof in order to control fungus and/or fungal spores, and/or nematodes and/or insects, and/or to promote overall plant health and development at a rate which provides the desired results without adversely affecting the desired plant, for example, at a rate of 0.1 to 10,000 grams of active ingredient per hectare (hereinafter, "g ai/ha"), or 1 to 1,000 g ai/ha, or 5-500 g ai/ha, or 10 to 300 g ai/ha or 25-250 g ai/ha.

"Plant health" refers to one or more advantageous properties including: emergence, crop yield, protein content, more developed root system (improved root growth), tillering increase, increase in plant height, increase in size of leaf blade, fewer dead basal leaves and/or fruit, stronger tillers, greener leaf color, pigment content, greater photosynthetic activity, decreased need for fertilizer, decrease in need for seeds, more productive tillers, earlier flowering, earlier grain maturity, less plant verse (lodging), increased shoot growth, enhanced plant vigor, increased plant stand and early germination, drought tolerance, and any other advantages familiar to a person skilled in the art.

"Promote," as used herein in connection with plant health and development, means to advance, increase,

facilitate, or otherwise positively impact plant health and/or development, including but not limited to increasing shoot and/or root growth, drought tolerance, and/or fruit yield.

"Habitat" denotes where a plant or crop is growing or where a plant or crop will be grown. The method described herein can be used to treat a plant, crop, or habitat thereof.

The composition comprising a pesticide can be formulated in any desired manner and include any desired excipients.

The product used can be a commercial formulation which contains various formulation additives.

The compositions can be formulated as a granular formulation, seed treatment, foliar composition, a foliar spray, solutions, emulsions, suspension, coating formulation, encapsulated formulation, solid, liquid, fertilizer, paste, powder, suspension, or suspension concentrate. The composition may be employed alone or in solid, dispersant, or liquid formulation. In yet another aspect, a composition described herein is formulated as a tank-mix product.

These formulations are produced in any desired or known manner, for example by mixing the active compounds with extenders, such as liquid solvents, pressurized liquefied gases and/or solid carriers, optionally with the use of surface-active agents, such as emulsifiers and/or dispersants and/or foam formers. If the extender used is water, it is also useful to employ for example organic solvents as cosolvents. Suitable liquid solvents include: aromatics, such as xylene, toluene or alkylnaphthalenes, chlorinated aromatics or chlorinated aliphatic hydrocarbons, such as chlorobenzenes, chloroethylenes or methylene chloride, aliphatic hydrocarbons, such as cyclohexane or paraffins, for example mineral oil fractions, alcohols, such as butanol or glycol as well as their ethers and esters, ketones, such as acetone, methyl ethyl ketone, methyl isobutyl ketone or cyclohexanone, strongly polar solvents, such as dimethylformamide and dimethyl sulphoxide, and also water. Liquefied gaseous extenders or carriers include those liquids which are gaseous at ambient temperature and at atmospheric pressure, for example aerosol propellants such as halogenated hydrocarbons and also butane, propane, nitrogen and carbon dioxide. As solid carriers there are suitable: for example, ground natural minerals, such as kaolins, clays, talc, chalk, quartz, attapulgite, montmorillonite or diatomaceous earth, and ground synthetic minerals, such as finely divided silica, alumina and silicates. As solid carriers for granules there are suitable: for example, crushed and fractionated natural rocks such as calcite, pumice, marble, sepiolite and dolomite, and also synthetic granules of inorganic and organic meals, and granules of organic material such as sawdust, coconut shells, maize cobs and tobacco stalks. As emulsifiers and/or foam formers there are suitable: for example, non-ionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and protein hydrolysates. As dispersants, for example, lignosulphite waste liquors, methylcellulose, and sodium alkyl naphthalene sulfonates are suitable.

Tackifiers are chemical compounds increasing the stickiness of compositions such as natural and synthetic polymers in the form of powders, granules or lattices, such as gum arabic, polyvinyl alcohol and polyvinyl acetate, as well as natural phospholipids, such as cephalins and lecithins, and synthetic phospholipids, can be used in the formulations. Other possible additives are mineral and vegetable oils.

Colorants such as inorganic pigments, for example iron oxide, titanium oxide and Prussian Blue, and trace nutrients such as salts of iron, manganese, boron, copper, cobalt, molybdenum and zinc, can also be used. Also, one or more of biocides, antifreezes, antifoams, and other inerts or excipients can be included in the final formulation.

Any desired useful plant or crop can be treated by the composition of the present invention to promote the health of the plant.

In an aspect, the composition of the present invention may be used to treat the plants being suitable target crops: Alfafa, Anacardiaceae sp. (mango); beet, for example sugar beet and fodder beet; cereals, for example wheat, barley, rye, oats, rice, maize, triticale and millet/sorghum; citrus fruit, for example oranges, lemons, mandarins, grapefruits and tangerines; cucurbits, for example pumpkin/squash, gherkins, calabashes, cucumbers and melons; fibre plants, for example cotton, flax, hemp and jute, cannabis; Latex plants; Lauraceae sp. (e.g. avocado, cinnamon, camphor), legumes, for example beans, lentils, peas and soybeans, common beans and broad beans; Malvaceae sp. (e.g. okra, cocoa); Manihoteae sp. (for instance, Manihot esculenta, manioc), oil crops, for example Brassica oil seeds such as Brassica napus (e.g. canola, rapeseed), Brassica rapa, B. juncea (e.g. (field) mustard) and Brassica carinata, Arecaceae sp. (e.g. oilpalm, coconut), mustard, poppies, Oleaceae sp. (e.g. olive tree, olives), sunflowers, castor oil plants; Papaveraceae (e.g. poppy), pome fruit for example apples, pears and quince, Ribesioidae sp., soft fruits for example strawberries, raspberries, blackberries, blueberries, red and black currant and gooseberry; Rubiaceae sp. (for instance, coffee), Solanaceae sp. (e.g. tomatoes, potatoes, peppers, bell peppers, capsicum, aubergines, eggplant, tobacco), Stevia rebaudiana; stone fruit for example peaches, nectarines, cherries, plums, common plums, apricots; Theobroma sp. (for instance, Theobroma cacao: cocoa), vegetables, for example spinach, lettuce, Asparagaceae (e.g. asparagus), Cruciferae sp. (e.g. white cabbage, red cabbage, broccoli, cauliflower, Brussels sprouts, pak choi, kohlrabi, radishes, horseradish, cress and Chinese cabbage), onions, bell peppers, artichokes and chicory - including root chicory, endive or common chicory, leeks and onions; Umbelliferae sp. (e.g. carrots, parsley, celery and celeriac); Vitis sp. (for instance, Vitis vinifera: grape vine, raisins, table grapes), Musaceae sp. (e.g. banana trees, bananas and plantations), nuts of various botanical taxa such as peanuts, Juglandaceae sp.(Walnut, Persian Walnut (Juglans regia), Butternut (Juglans), Hickory,

Shagbark Hickory, Pecan (Carya), Wingnut (Pterocarya)), Fagaceae sp. (Chestnut (Castanea), Chestnuts, including Chinese Chestnut, Malabar chestnut, Sweet Chestnut, Beech (Fagus), Oak (Quercus), Stone-oak, Tanoak (Lithocarpus)); Betulaceae sp. (Alder (Alnus), Birch (Betula), Hazel, Filbert (Corylus), Hornbeam), Leguminosae sp. (for instance peanuts, peas and beans beans - such as climbing beans and broad beans), Asteraceae sp. (for instance sunflower seed), Almond, Beech, Butternut, Brazil nut, Candlenut, Cashew, Colocynth, Cotton seed, Cucurbita ficifolia, Filbert, Indian Beech or Pongam Tree, Kola nut, Lotus seed, Macadamia, Mamoncillo, Maya nut, Mongongo, Oak acorns, Ogbono nut, Paradise nut, Pili nut, Pine nut, Pistacchio, Pumpkin seed, water Caltrop; soybeans (Glycine sp., Glycine max); spices like Ajwain (Trachyspermum ammi), Allspice (Pimenta dioica), Alkanet (Anchusa arvensis), Amchur - mango powder (Mangifera), Angelica (Angelica archangelica), Anise (Pimpinella anisum), Aniseed myrtle (Syzygium anisatum), Annatto (Bixa orellana L.), Apple mint (Mentha suaveolens), Artemisia vulgaris/Mugwort, Asafoetida (Ferula assafoetida), Berberis, Banana, Basil (Ocimum basilicum), Bay leaves, Bistort (Persicaria bistorta"), Black cardamom, Black cumin, Blackcurrant, Black limes, Bladder wrack (Fucus vesiculosus), Blue Cohosh, Blue-leaved Mallee (Eucalyptus polybractea), Bog Labrador Tea (Rhododendron groenlandicum), Boldo (Peumus boldus), Bolivian Coriander (Porophyllum ruderale), Borage (Borago officinalis), Calamus, Calendula, Calumba (Jateorhiza calumba), Chamomile, Candle nut, Cannabis, Caper (Capparis spinosa), Caraway, Cardamom, Carob Pod, Cassia, Casuarina, Catnip, Cat's Claw, Catsear, Cayenne pepper, Celastrus Paniculatus - Herb., Celery salt, Celery seed, Centaury, Chervil (Anthriscus cerefolium), Chickweed, Chicory, Chile pepper, Chili powder, Cinchona, Chives (Allium schoenoprasum), Cicely (Myrrhis odorata), Cilantro (see Coriander) (Coriandrum sativum), Cinnamon (and Cassia), Cinnamon Myrtle (Backhousia myrtifolia), Clary, Cleavers, Clover, Cloves, Coffee, Coltsfoot, Comfrey, Common Rue, Condurango, Coptis, Coriander, Costmary (Tanacetum balsamita), Couchgrass, Cow Parsley (Anthriscus sylvestris), Cowslip, Cramp Bark (Viburnum opulus), Cress, Cuban Oregano (Plectranthus amboinicus), Cudweed, Cumin, Curry leaf (Murraya koenigii), Damiana (Turnera aphrodisiaca, T. diffusa), Dandelion (Taraxacum officinale), Demulcent, Devil's claw (Harpagophytum procumbens), Dill seed, Dill (Anethum graveolens), Dorrigo Pepper (Tasmannia stipitata), Echinacea -, Echinopanax Elatum, Edelweiss, Elderberry, Elderflower, Elecampane, Eleutherococcus senticosus, Emmenagogue, Epazote (Chenopodium ambrosioides), Ephedra -, Eryngium foetidum, Eucalyptus, Fennel (Foeniculum vulgare), Fenugreek, Feverfew, Figwort, Filé powder, Five-spice powder (Chinese), Fo-ti-tieng, Fumitory, Galangal, Garam masala, Garden cress, Garlic chives, Garlic, Ginger (Zingiber officinale), Ginkgo biloba, Ginseng, Ginseng, Siberian (Eleutherococcus senticosus), Goat's Rue (Galega officinalis), Goada masala, Golden Rod, Golden Seal, Gotu Kola, Grains of paradise (Aframomum melegueta), Grains of Selim (Xylopia aethiopica), Grape seed extract, Green tea, Ground Ivy, Guaco, Gypsywort, Hawthorn (Crataegus sanguinea), Hawthorne Tree, Hemp, Herbes de Provence, Hibiscus, Holly, Holy Thistle, Hops, Horehound, Horseradish, Horsetail (Equisetum telmateia), Hyssop (Hyssopus officinalis), Jalap, Jasmine, Jiaogulan (Gynostemma pentaphyllum), Joe Pye weed (Gravelroot), John the Conqueror, Juniper, Kaffir Lime Leaves (Citrus hystrix, C. papedia), Kaala masala, Knotweed, Kokam, Labrador tea, Lady's Bedstraw, Lady's Mantle, Land cress, Lavender (Lavandula spp.), Ledum, Lemon Balm (Melissa Officinalis), Lemon basil, Lemongrass (Cymbopogon citratus, C. flexuosus, and other species), Lemon Ironbark (Eucalyptus staigeriana), Lemon mint, Lemon Myrtle (Backhousia citriodora), Lemon Thyme, Lemon verbena (Lippia citriodora), Licorice - adaptogen, Lime Flower, Limnophila aromatica, Lingzhi, Linseed, Liquorice, Long pepper, Lovage (Levisticum officinale), Luohanguo, Mace, Mahlab, Malabathrum, Manchurian Thorn Tree (Aralia manchurica)]], Mandrake, Marjoram (Origanum majorana), Marrubium vulgare, Marsh Labrador Tea, Marshmallow, Mastic, Meadowsweet, Mei Yen, Melegueta pepper ( Aframomum melegueta), Mint (Mentha spp.), Milk thistle (Silybum), Bergamot (Monarda didyma), Motherwort, Mountain Skullcap, Mullein (Verbascum thapsus), Mustard, Mustard seed, Nashia inaguensis, Neem, Nepeta, Nettle, Nigella sativa, Nigella (Kolanji, Black caraway), Noni, Nutmeg (and Mace) Marijuana, Oenothera (Oenothera biennis et al), Olida (Eucalyptus olida), Oregano (Origanum vulgare, O. heracleoticum, and other species), Orris root, Osmorhiza, Olive Leaf (used in tea and as herbal supplement), Panax quinquefolius, Pandan leaf, Paprika, Parsley (Petroselinum crispum), Passion Flower, Patchouli, Pennyroyal, Pepper (black, white, and green), Peppermint, Peppermint Gum (Eucalyptus dives), Perilla, Plantain, Pomegranate, Ponch phoran, Poppy seed, Primrose (Primula) - candied flowers, tea, Psyllium, Purslane, Quassia, Quatre épices, Ramsons, Ras el-hanout, Raspberry (leaves), Reishi, Restharrow, Rhodiola rosea, Riberry (Syzygium luehmannii), Rocket/Arugula, Roman chamomile, Rooibos, Rosehips, Rosemary (Rosmarinus officinalis), Rowan Berries, Rue, Safflower, Saffron, Sage (Salvia officinalis), Saigon Cinnamon, St John's Wort, Salad Burnet (Sanguisorba minor or Poterium sanguisorba), Salvia, Sichuan Pepper (Sansho), Sassafras, Savory (Satureja hortensis, S. Montana), Schisandra (Schisandra chinensis), Scutellaria costaricana, Senna (herb), Senna obtusifolia, Sesame seed, Sheep Sorrel, Shepherd's Purse, Sialagogue, Siberian Chaga, Siberian ginseng (Eleutherococcus senticosus), Siraitia grosvenorii (luohanguo), Skullcap, Sloe Berries, Smudge Stick, Sonchus, Sorrel (Rumex spp.), Southernwood, Spearmint, Speedwell, Squill, Star anise, Stevia, Strawberry Leaves, Suma (Pfaffia paniculata), Sumac, Summer savory, Sutherlandia frutescens, Sweet grass, Sweet cicely (Myrrhis odorata), Sweet woodruff, Szechuan pepper (Xanthoxylum piperitum), Tacamahac, Tamarind, Tandoori masala, Tansy, Tarragon (Artemisia dracunculus), Tea, Teucrium polium, Thai basil, Thistle, Thyme, Toor Dall, Tormentil, Tribulus terrestris, Tulsi (Ocimum tenuiflorum), Turmeric (Curcuma longa), Uva Ursi also known as Bearberry, Vanilla (Vanilla planifolia), Vasaka, Vervain, Vetiver, Vietnamese Coriander (Persicaria odorata), Wasabi (Wasabia

japonica), Watercress, Wattleseed, Wild ginger, Wild Lettuce, Wild thyme, Winter savory, Witch Hazel, Wolfberry, Wood Avens, Wood Betony, Woodruff, Wormwood, Yarrow, Yerba Buena, Yohimbe, Za'atar, Zedoary Root, as well as genetically modified homologues of these crops.

Plants are understood as meaning, in the present context, all plants and plant populations, such as desired wild plants or crop plants (including naturally occurring crop plants). Crop plants or crops may be plants which can be obtained by conventional breeding and optimization methods or else by biotechnological and genetic engineering methods or by combinations of these methods, including the transgenic plants and including the plant varieties capable or not capable of being protected by plant breeders' rights.

A composition described herein can be applied to a soil, plant, crop, seed, leaf, or plant part thereof in a single application step. In another aspect, a composition described herein is applied to a plant, crop, seed, leaf, or plant part thereof in multiple application steps, for example, two, three, four, five or more application steps. In another aspect, the second, third, fourth, or fifth or more application steps may be with the same or different compositions. The methods described herein also provide for an aspect where multiple application steps are excluded.

A composition described herein can be applied to a soil, plant, crop, seed, or plant part thereof in one or more application intervals of about 30 minutes, about 1 hour, about 2 hours, about 6 hours, about 8 hours, about 12 hours, about 1 day, about 5 days, about 7 days, about 10 days, about 12 days, about 14 days, about 21 days, about 28 days, about 35 days, about 45 days, about 50 days, or about 56 days.

A composition described herein can be applied to a plant, crop, seed, or plant part thereof one or more times during a growing, planting, or harvesting season. In another aspect, a compound or composition described herein is applied to a plant, crop, seed, or plant part thereof in one, two, three, four, or five or more times during a growing, planting, or harvesting season. In another aspect, a compound or composition described herein is applied to a plant, crop, seed, or plant part thereof only one time, no more than two times, or no more than three times during a growing, planting, or harvesting season. In yet another aspect, a compound or composition is applied in a single step to a seed. In yet another aspect, a seed described herein is planted in a one-pass application step.

In another aspect, the disclosure provides for pre-plant, pre-emergent, post-emergent, application steps or combinations thereof. In another aspect, a compound or composition described herein is first applied in a pre-plant step and followed by one or more pre-emergent or post-emergent steps. In yet another aspect, the disclosure provides for only a pre-plant step.

Methods described herein can be used in the treatment of genetically modified organisms (GMOs), *e.g.,* plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology or RNA interference - RNAi - technology). A heterologous gene that is located in the genome is also called a transgene. A transgene that is defined by its particular location in the plant genome is called a transformation or transgenic event.

In an aspect, plants can be obtained by traditional breeding and optimization methods or by biotechnological and recombinant methods, or combinations of these methods, including the transgenic plants and including the plant varieties which are capable or not capable of being protected by Plant Breeders' Rights.

In another aspect, plant species and plant varieties which are found in the wild or which are obtained by traditional biological breeding methods, such as hybridization or protoplast fusion, and parts of these species and varieties are treated. In another embodiment, transgenic plants and plant varieties which were obtained by recombinant methods, if appropriate in combination with traditional methods (genetically modified organisms) and their parts are treated.

"Plant parts" should be understood as meaning all above ground and subsoil parts and organs of plants, such as shoot, leaf, flower, root, leaves, needles, stalks, stems, fruiting bodies, fruits and seeds, tubers and rhizomes. Plant parts also include harvested crops, and also vegetative and generative propagation material, for example cuttings, tubers, rhizomes, slips and seeds.

Seeds, plant parts, leaves, and plants may be treated with the described compositions by applying the compounds or compositions directly to the seed, plant part, leaf, or plant. In another aspect, the seed, plant part, leaf, or plant may be treated indirectly, for example by treating the environment or habitat in which the seed, plant part, leaf, or plant is exposed to. Conventional treatment methods may be used to treat the environment or habitat including dipping, spraying, fumigating, chemigating, fogging, scattering, brushing on, shanking or injecting.

According to the invention, the treatment of the plants and seeds with a composition described herein can be carried out directly by the customary treatment methods, for example by immersion, spraying, vaporizing, fogging, injecting, dripping, drenching, broadcasting or painting, and seed treatment.

A composition described herein can take any of a variety of dosage forms including, without limitation, suspension concentrates, aerosols, capsule suspensions, cold-fogging concentrates, warm-fogging concentrates, encapsulated granules, fine granules, flowable concentrates for the treatment of seed, ready-to-use solutions, dustable

powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspoemulsion concentrates, soluble concentrates, wettable powders, soluble powders, dusts and granules, water-soluble granules or tablets, water-soluble powders for the treatment of seed, wettable powders, natural products and synthetic substances impregnated with a compound or composition described herein, a net impregnated with a compound or composition described herein, and also microencapsulations in polymeric substances and in coating materials for seed, and also ULV cold-fogging and warm-fogging formulations.

These compositions include not only compositions which are ready to be applied to the plant or seed to be treated by means of a suitable device, such as a spraying or dusting device or drones, but also concentrated commercial compositions which must be diluted before they are applied to the crop.

The pesticidal compositions of the present invention can be used to curatively or preventively control phytopathogenic fungi on crops, but also to curatively or preventively control nematodes and/or insects.

The composition according to the present invention is well tolerated by plants, have favorable homeotherm toxicity and are environmentally friendly; it is suitable for protecting plants and plant organs, for increasing harvest yields, for improving the quality of the harvested material and for controlling animal pests, in particular insects, arachnids and nematodes encountered in agriculture, in forests, in gardens and leisure facilities, in the protection of stored products and materials and in the hygiene sector. It is preferably used as crop protection agents. It is active against normally sensitive and resistant species and against all or some stages of development. Among the animal pests that can also be controlled by the method according to the present invention, mention may be made of:

The plant-parasitic nematodes such as species of the genera *Aphelenchoides* spp., *Bursaphelenchus* spp., *Ditylenchus* spp., *Globodera* spp., *Heterodera* spp., *Longidorus* spp., *Meloidogyne* spp., *Pratylenchus* spp., *Radopholus* spp., *Trichodorus* spp., *Tylenchulus* spp, *Xiphinema* spp., *Helicotylenchus* spp., *Tylenchorhynchus* spp., *Scutellonema* spp., *Paratrichodorus* spp., *Meloinema* spp., *Paraphelenchus* spp., *Aglenchus* spp., *Belonolaimus* spp., *Nacobbus* spp, *Rotylenchulus* spp., *Rotylenchus* spp., *Neotylenchus* spp., *Paraphelenchus* spp., *Dolichodorus* spp., *Hoplolaimus* spp., *Punctodera* spp., *Criconemella* spp., *Quinisulcius* spp., *Hemicycliophora* spp., *Anguina* spp., *Subanguina* spp., *Hemicriconemoides* spp., *Psilenchus* spp., *Pseudohalenchus* spp., *Criconemoides* spp., *Cacopaurus* spp..

Thus, according to a further aspect of the present invention, there is provided a method for preventively or curatively controlling phytopathogenic fungi of crops but also to curatively or preventively control nematode pests, characterized in that an effective and non-phytotoxic amount of a composition as hereinbefore defined is applied in the area where the nematodes are to be controlled.

The composition according to the present invention may also be used against pests and diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting one or more compounds of the present invention, or a composition according to the invention; this includes for example direct application, spraying, dipping, injection or any other suitable means.

The expression "effective and non-phytotoxic amount" means an amount of composition according to the invention which is sufficient to control or destroy the pests and/or diseases present or liable to appear on the crops, and which does not entail any appreciable symptom of phytotoxicity for the crops. Such an amount can vary within a wide range depending on the pests and diseases to be combated or controlled, the type of crop, the climatic conditions and the compounds included in the composition according to the invention.

This amount can be determined by systematic field trials, which are within the capabilities of a person skilled in the art.

In an aspect, a composition disclosed herein may optionally include one or more additional compounds providing an additional beneficial or otherwise useful effect. Such compounds include, without limitation, an adhesive, a surfactant, a solvent, a wetting agent, an emulsifying agent, a biocide, a microbicide, a dispersing agent, a thickening agent, a stabilizing agent, a carrier, an adjuvant, a diluent, a fertilizer of a micronutrient or macronutrient nature, a feeding inhibitor, an insect molting inhibitor, an insect mating inhibitor, an insect maturation inhibitor, a nutritional or horticultural supplement, or any combination thereof. In an aspect, a composition described herein is odor free.

In an aspect, a composition disclosed herein may optionally include one or more surfactants. Commercially available surfactants include, for example, acrylic copolymer solutions or nonionic polymer blends.

In another aspect, a composition disclosed herein may optionally include one or more emulsifying agents.

In an aspect, a composition disclosed herein may comprise one or more emulsifiers present at a total w/w concentration of 0.001% to 10%, or 0.01% to 5%, or 0.05% to 2.0%.

In an aspect, a composition disclosed herein may optionally include one or more biocides and/or microbicides. Commercially available biocides and microbicides include, for example, Proxel™ GXL, provided by Arch® Biocides, and Kathon™ CG/ICP, provided by Dow Chemical Company.

In an aspect, a composition disclosed herein may comprise one or more biocides and/or microbicides present at a

total w/w concentration of 0.001% to 10%, or 0.01% to 1%, or 0.05% to 0.5%.

In an aspect, a composition disclosed herein may optionally include one or more dispersing agents. Commercially available dispersing agents include, for example, Morwet® D 425, provided by AkzoNobel Agrochemicals.

In an aspect, a composition disclosed herein may comprise one or more dispersing agents present at a total w/w concentration of 0.01% to 10%, or 0.1% to 5%, or 0.25% to 2.5%.

In an aspect, a composition disclosed herein may optionally include one or more thickening or stabilizing agents. Commercially available thickeners/stabilizers include, for example, Rhodopol® 23, provided by Solvay Novecare.

In an aspect, a composition disclosed herein may comprise one or more thickening or stabilizing agents present at a total w/w concentration of 0.001% to 10%, or 0.05% to 5%, or 0.01% to 1%. Also, an antifoam agent, such as (SAG30, Antifoam 8830), can be used at desired amounts, for example from .001% to 1% by weight of the final composition. Additionally, an antifreeze, such as propylene glycol or glycerine, can be used, for example at 0-20% by weight.

In an aspect, a composition disclosed herein may include one or more additional pesticides, such as herbicides, insecticides, fungicides, bactericides, acaricides, nematicides or pheromones or other compounds with biological activity. The mixtures thus obtained have a broadened spectrum of activity.

In another aspect, compositions of the present invention comprise one or more gram-negative bacteria and/or one or more members of the bacterial genus *Bacillus.*

Preferred are *Bacillus* species selected from the group consisting of *Bacillus agri, Bacillus aizawai, Bacillus albolactis, Bacillus amyloliquefaciens, Bacillus firmus, Bacillus coagulans, Bacillus endoparasiticus, Bacillus endorhythmos, Bacillus firmus, Bacillus kurstaki, Bacillus lacticola, Bacillus lactimorbus, Bacillus lactis, Bacillus laterosporus, Bacillus lentimorbus, Bacillus licheniformis, Bacillus megaterium, Bacillus medusa, Bacillus metiens, Bacillus natto, Bacillus nigrificans, Bacillus popillae, Bacillus pumilus, Bacillus siamensis, Bacillus sphaericus, Bacillus* spp., *Bacillus subtilis, Bacillus thuringiensis, Bacillus uniflagellatus, Bacillus cereus* and those listed in the category of *Bacillus* Genus in the "Bergey's Manual of Systematic Bacteriology, First Ed. (1986)" alone or in combination.

In an aspect of the invention, the *Bacillus* species is either *B. firmus, B. amyloliquefaciens, B. subtilis,* or *B. thuringiensis.*

In another aspect, a composition disclosed herein may be applied to a plant, a plant part, or a habitat thereof, in combination with one or more compositions comprising further known herbicides, insecticides, fungicides, bactericides, acaricides, nematicides, or pheromones or other compounds with biological activity. In some instances, synergistic effects may be obtained, *i.e.,* the activity of the mixture exceeds the activity of the individual components. Such additional actives can be used in any desired ratios with the succinate dehydrogenase inhibitors of the instant compositions, for example, at weight ratios of 1:100 to 100:1 or 50:1 to 1:50 or 25:1 to 1:25 or 1:10 to 10:1 or 5:1 to 1:5 of SDHI to additional component.

These optional additional compounds and/or compositions can be determined by systematic field trials, which are within the capabilities of a person skilled in the art.

Suitable herbicides which can be used in combination with compositions disclosed herein, include, any known herbicides for example:

2,4-D, acetochlor, acifluorfen, acifluorfen-sodium, aclonifen, alachlor, alloxydim, alloxydim-sodium, ametryn, amicarbazone, amidosulfuron, aminopyralid, amitrole, anilofos, asulam, atrazine, azafenidin, azimsulfuron, beflubutamid, benazolin, benazolin-ethyl, benfuresate, bensulfuron-methyl, bentazone, benzfendizone, benzobicyclon, benzofenap, bifenox, bilanafos, bispyribac-sodium, bromacil, bromobutide, bromofenoxim, bromoxynil, butachlor, butafenacil, butenachlor, butralin, butroxydim, butylate, cafenstrole, carbetamide, carfentrazone-ethyl, chlomethoxyfen, chloridazon, chlorimuron-ethyl, chlornitrofen, chlorotoluron, chlorsulfuron, cinidon-ethyl, cinmethylin, cinosulfuron, clefoxydim, clethodim, clodinafop-propargyl, clomazone, clomeprop, clopyralid, cloransulam-ethyl, cumyluron, cyanazine, cyclosulfamuron, cycloxydim, cyhalofop-butyl, desmedipham, dicamba, dichlobenil, dichlorprop, dichlorprop-P, diclofop-methyl, diclosulam, difenzoquat, diflufenican, diflufenzopyr, dikegulac-sodium, dimefuron, dimepiperate, dimethachlor, dimethametryn, dimethenamid, diquat-dibromide, dithiopyr, diuron, dymron, EPTC, esprocarb, ethalfluralin, ethametsulfuron-methyl, ethofumesate, ethoxyfen, ethoxysulfuron, etobenzanid, fenoxaprop-ethyl, fenoxaprop-P-ethyl, fentrazamide, flamprop-M-isopropyl, flamprop-M-methyl, flazasulfuron, florasulam, fluazifop, fluazifop-butyl, fluazolate, flucarbazone-sodium, flucetosulfuron, fluchloralin, flufenacet, flufenpyr, flumetsulam, flumiclorac-pentyl, flumioxazin, fluometuron, fluorochloridone, fluoroglycofen-ethyl, flupoxam, flupyrsulfuron-methyl-sodium, fluridone, fluroxypyr, fluroxypyr-butoxypropyl, fluroxypyr-meptyl, flurprimidol, flurtamone, fluthiacet-methyl, fomesafen, foramsulfuron, glufosinate, glufosinate-ammonium, glyphosate, halosulfuron-methyl, haloxyfop, haloxyfop-ethoxyethyl, haloxyfop-methyl, haloxyfop-P-methyl, hexazinone, imazamethabenz-methyl, imazamox, imazapic, imazapyr, imazaquin, imazethapyr, imazosulfuron, indanofan, iodosulfuron-methyl-natrium, ioxynil, isoproturon, isouron, isoxaben, isoxachlortole, isoxaflutole, ketospiradox, lactofen, lenacil, linuron, MCPA, mecoprop, mecoprop-P, mefenacet, mesosulfuron-methyl, mesotrione, metamifop, metamitron, metazachlor, methabenzthiazuron, methyldymron, metobromuron, metolachlor, metosulam, metoxuron, metribuzin, metsulfuron-methyl, molinate, monolinuron, naproanilide, napropamide, neburon, nicosulfuron, norflurazon, orbencarb, oryzalin, oxadiargyl, oxadiazon, oxasulfuron, oxaziclomefone, oxyfluorfen, paraquat, pelargonic acid, pendimethalin, pendralin, penoxsulam, pentoxazone, pethoxamid, phenmedipham, picloram, picolinafen, pinoxaden, piperophos,

pretilachlor, primisulfuron-methyl, profluazol, profoxydim, prometryn, propachlor, propanil, propaquizafop, propisochlor, propoxycarbazone-sodium, propyzamide, prosulfocarb, prosulfuron, pyraclonil, pyraflufen-ethyl, pyrazolate, pyrazosulfuron-ethyl, pyrazoxyfen, pyribenzoxim, pyributicarb, pyridafol, pyridate, pyriftalid, pyriminobac-methyl, pyrithiobac-sodium, quinclorac, quinmerac, quinoclamine, quizalofop-ethyl, quizalofop-P-ethyl, quizalofop-P-tefuryl, rimsulfuron, sethoxydim, simazine, simetryn, S-metolachlor, sulcotrione, sulfentrazone, sulfometuron-methyl, sulfosate, sulfosulfuron, tebuthiuron, tepraloxydim, terbuthylazine, terbutryn, thenylchlor, thiazopyr, thifensulfuron-methyl, thiobencarb, tiocarbazil, tralkoxydim, triallate, triasulfuron, triaziflam, tribenuron-methyl, triclopyr, tridiphane, trifloxysulfuron, trifluralin, triflusulfuron-methyl, tritosulfuron, 4-(4,5-di-hydro-4-methyl-5-oxo-3-trifluoromethyl-1H-1,2,4-triazol-1-yl)-2-(ethylsulfonylamino)-5-fluorobenzenecarbothioamide (HWH4991, cf. WO-A-95/30661), and 2-chloro-N-[1-(2,6-dichloro-4-difluoromethylphenyl)-4-nitro-1H-pyrazol-5-yl]propanecarboxamide (SLA5599, cf. EP-A-303153).

Suitable insecticides which can be used in combination with compositions disclosed herein, include, any known insecticides, for example:

(1) acetylcholine receptor agonists/antagonists such as chloronicotinyls/neonicotinoids, nicotine, bensultap or cartap. Suitable examples of chloronicotinyls/neonicotinoids include acetamiprid, clothianidin, dinotefuran, imidacloprid, nitenpyram, nithiazine, thiacloprid, thiamethoxam, imidaclothiz and (2E)-1-[(2-chloro-1,3-thiazol-5-yl) methyl]-3,5-dimethyl-N-nitro-1,3,5-triazinan-2-imine;

(2) acetylcholinesterase (AChE) inhibitors such as carbamates and organophosphates. Suitable examples of carbamnates include alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, chloethocarb, dimetilan, ethiofencarb, fenobucarb, fenothiocarb, formetanate, furathiocarb, isoprocarb, metam-sodium, methiocarb, methomyl, metolcarb, oxamyl, phosphocarb, pirimicarb, promecarb, propoxur, thiodicarb, thiofanox, triazamate, trimethacarb. XMC and xylylcarb. Suitable examples of organophosphates include acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, demeton-S-methyl, demeton-S-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon and vamidothion;

(3) sodium channel modulators/voltage-gated sodium channel blockers such as pyrethroids and oxadiazines. Suitable examples of pyrethroids include acrinathrin, allethrin (d-cis-trans, d-trans), beta-cyfluthrin, bifenthrin, bioallethrin, bioallethrin-S-cyclopentyl-isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypennethrin (alpha-, beta-, theta-, zeta-), cyphenothrin, DDT, deltamethrin, empenthrin (1R-isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1R-trans isomer), prallethrin, profluthrin, protrifenbute, pyresmethrin, resmethrin, RU 15525, silafluofen, tau-fluvalinate, tefluthrin, terallethrin, tetramethrin (1R-isomer), tralocythrin, tralomethrin, transfluthrin. ZXI 8901 and pyrethrins (pyrethrum). Suitable example of oxadiazines includes indoxacarb;

(4) acetylcholine receptor modulators such as spinosyns. Suitable example of spinosyns includes spinosad;

(5) GABA-gated chloride channel antagonists such as cyclodiene organochlorines and fiproles. Suitable examples of cyclodiene organochlorines include camphechlor, chlordane, endosulfan, gamma-HCH, HCH, heptachlor, lindane and methoxychlor. Suitable exaples of fiproles include acetoprole, ethiprole, fipronil and vaniliprole;

(6) chloride channel activators such as mectins. Suitable examples of mectins include abamectin, avermectin, emamectin, emamectin-benzoate, ivermectin, lepimectin, milbemectin and milbemycin;

(7) juvenile hormone mimetics such as diofenolan, epofenonane, fenoxycarb, hydroprene, kinoprene, methoprene, pyriproxifen, triprene;

(8) ecdysone agonists/disruptors such as diacylhydrazines. Suitable examples of diacylhydrazines include chromafenozide, halofenozide, methoxyfenozide andtebufenozide;

(9) inhibitors of chitinbiosynthesis such as benzoylureas, buprofezin and cyromazine. Suitable examples of benzoylureas include bistrifluron, chlofluazuron, diflubenzuron, fluazuron, flucycloxuron, flufenoxuron, hexaflumuron, lufenuron, novaluron, noviflumuron, penfluron, teflubenzuron and triflumuron;

(10) inhibitors of oxidative phosphorylation, ATP disruptors such as organotins and diafenthiuron. Suitable examples of organotins include azocyclotin, cyhexatin and fenbutatin oxide;

(11) decouplers of oxidative phosphorylation by disruption of the H proton gradient such as pyrroles and dinitrophenols. Suitable example of pyrroles includes chlorfenapyr. Suitable examples of dinitrophenols include binapacyrl, dinobuton, dinocap and DNOC;

(12) site I electron transport inhibitors such as METIs, hydramethylnone and dicofol. Suitable examples of METIs include fenazaquin, fenpyroximate, pyrimidifen, pyridaben, tebufenpyrad, tolfenpyrad;

(13) site 11 electron transport inhibitors such as rotenone;

(14) site III electron transport inhibitors such as acequinocyl and fluacrypyrim;

(15) microbial disrupters of the intestinal membrane of insects such as Bacillus thuringiensis strains;

(16) inhibitors of lipid synthesis such as tetronic acids and tetramic acids. Suitable examples of tetronic acids include spirodiclofen, spiromesifen and spirotetramat. Suitable example of tetramic acids includes cis-3-(2,5-dimethylphenyl)-8-methoxy-2-oxo-1-azaspiro[4.5]dec-3-en-4-yl ethyl carbonate (alias: carbonic acid, 3-(2,5-dimethylphenyl)-8-methoxy-2-oxo-1-azaspiro[4.5]dec-3-en-4-yl ethyl ester (CAS Reg. No.: 382608-10-8);

(17) carboxamides such as flonicamid;

(18) octopaminergic agonists such as amitraz;

(19) inhibitors of the magnesium-stimulated ATPase such as propargite;

(20) ryanodin receptor agonists such as phthalamides or rynaxapyr. Suitable example of phthalamides includes N2-[1,1-dimethyl-2-(methylsulphonyl)ethyl]-3-iodo-N'-[2-methyl-4-[1,2,2,2-tetrafluoro-1-(trifluoromethyl)ethyl]phenyl]-1,2-benzenedicarboxamide (i.e. flubendiamide, CAS reg. No.: 272451-65-7);

(21) nereistoxin analogues such as thiocyclam hydrogen oxalate andthiosultap-sodium;

(22) biologics, hormones or pheromones such as azadirachtin, Bacillusspec., Beauveria spec., codlemone, Metarrhizium spec., Paecilomyces spec., thuringiensis and Verticillium spec;

(23) active compounds having unknown or non-specified mechanisms of action such as fumigants, selective feeding inhibitors, mite growth inhibitors, amidoflumet; benclothiaz, benzoximate, bifenazate, bromopropylate, buprofezin, chinomethioat, chlordimeform, chlorobenzilate, chloropicrin, clothiazoben, cycloprene, cyflumetofen, dicyclanil, fenoxacrim, fentrifanil, flubenzimine, flufenerim, flutenzin, gossyplure, hydramethylnone, japonihure, metoxadiazone, petroleum, piperonyl butoxide, potassium oleate, pyrafluprole, pyridalyl, pyriprole, sulfluramid, tetradifon, tetrasul, triarathene, verbutin, furthermore the compound 3-methylphenyl propylcarbamate (Tsumacide Z), the compound 3-(5-chloro-3-pyridinyl)-8-(2,2,2-trifluoroethyl)-8-azabicyclo[3.2.1]octane-3-carbonitrile (CAS reg. No. 185982-80-3) and the corresponding 3-endo isomer (CAS reg. No. 185984-60-5) (cf WO 96/37494, WO 98/25923), and also preparations comprising insecticidal effective plant extracts, nematodes, fungi or viruses. Suitable examples of fumigants include aluminium phosphide, methyl bromide and sulphuryl fluoride. Suitable examples of selective feeding inhibitors include cryolite, flonicamid and pymetrozine. Suitable examples of mite growth inhibitors include clofentezine, etoxazole and hexythiazox.

Suitable additional fungicides which can be used in combination with compositions disclosed herein, include, known fungicides, for example:

(1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid.

(2) Inhibitors of the mitosis and cell division, for example benomyl, carbendazim, chlorfenazole, diethofencarb, ethaboxam, fuberidazole, pencycuron, thiabendazole, thiophanate, thiophanate-methyl and zoxamide.

(3) Inhibitors of the respiration, for example diflumetorim as CI-respiration inhibitor; bixafen, boscalid, carboxin, fenfuram, flutolanil, fluopyram, furametpyr, furmecyclox, isopyrazam (9R-component), isopyrazam (9S-component), mepronil, oxycarboxin, penthiopyrad, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyribencarb, trifloxystrobin as CIII-respiration inhibitor.

(4) Compounds capable to act as an uncoupler, like for example binapacryl, dinocap, fluazinam and meptyldinocap.

(5) Inhibitors of the ATP production, for example fentin acetate, fentin chloride, fentin hydroxide, and silthiofam.

(6) Inhibitors of the amino acid and/or protein biosynthesis, for example andoprim, blasticidin-S, cyprodinil, kasugamycin, kasugamycin hydrochloride hydrate, mepanipyrim and pyrimethanil.

(7) Inhibitors of the signal transduction, for example fenpiclonil, fludioxonil and quinoxyfen.

(8) Inhibitors of the lipid and membrane synthesis, for example biphenyl, chlozolinate, edifenphos, etridiazole, iodocarb, iprobenfos, iprodione, isoprothiolane, procymidone, propamocarb, propamocarb hydrochloride, pyrazophos, tolclofos-methyl and vinclozolin.

(9) Inhibitors of the ergosterol biosynthesis, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipconazole, metconazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole.

(10) Inhibitors of the cell wall synthesis, for example benthiavalicarb, dimethomorph, flumorph, iprovalicarb, mandipropamid, polyoxins, polyoxorim, prothiocarb, validamycin A, and valiphenal.

(11) Inhibitors of the melanine biosynthesis, for example carpropamid, diclocymet, fenoxanil, phthalide, pyroquilon and tricyclazole.

(12) Compounds capable to induce a host defence, like for example acibenzolar-S-methyl, probenazole, and tiadinil.

(13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulphur and sulphur preparations including calcium polysulphide, thiram, tolylfluanid, zineb and ziram.

(14) Further compounds like for example 2,3-dibutyl-6-chlorothieno[2,3-d]pyrimidin-4(3H)-one, ethyl (2Z)-3-amino-2-cyano-3-phenylprop-2-enoate, N-[2-(1,3-dimethylbutyl)phenyl]-5-fluoro-1,3-dimethyl-1H-pyrazole-4-carboxamide, N-{2-[1,1'-bi(cyclopropyl)-2-yl]phenyl}-3-(difluoromethyl)-1-methyl-1H-pyrazole-4-carboxamide, 3-(difluoromethyl)-1-methyl-N-(3',4',5'-trifluorobiphenyl-2-yl)-1H-pyrazole-4-carboxamide, 3-(difluoro-methyl)-N-[4-fluoro-2-(1,1,2,3,3,3-hexafluoropropoxy)phenyl]-1-methyl-1H-pyrazole-4-carboxamide, (2E)-2-(2-{[6-(3-chloro-2-methylphenoxy)-5-fluoropyrimidin-4-yl]oxy}-phenyl)-2-(methoxyimino)-N-methylethanamide, (2E)-2-{2-[({[(2E,3E)-4-(2,6-dichloro-phenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyridine-3-carboxamide, N-(3-ethyl-3,5,5-trimethylcyclohexyl)-3-(formylamino)-2-hydroxybenzamide, 5-methoxy-2-methyl-4-(2-{[({(1E)-1-[3-(trifluoromethyl)phenyl]ethylidene}aminooxymethyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}-imino)methyl]phenyl}ethanamide, (2E)-2-{2-[({[(1E)-1-(3-{[(E)-1-fluoro-2-phenyl-ethenyl]oxy}phenyl)ethylidene]amino}oxy)methyl]phenyl}-2-(methoxyimino)-N-methylethanamide, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, O-{1-[(4-methoxyphenoxy)methyl]-2,2-dimethylpropyl}1H-imidazole-1-carbothioate, N-[2-(4-{[3-(4-chlorophenyl)prop-2-yn-1-yl]oxy}-3-methoxyphenyl)ethyl]-N2-(methylsulfonyl)valinamide, 5-chloro-7-(4-methylpiperidin-1-yl)-6-(2,4,6-trifluoro-phenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoro ethoxy)phenyl]-3-(trifluoromethyl)-1H-pyrazole-4-carboxamide, 2,3,5,6-tetrachloro-4-(methylsulfonyl)pyridine, 2-butoxy-6-iodo-3-propyl-4H-chromen-4-one, 2-phenylphenol

and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, quinolin-8-ol, quinolin-8-ol sulfate (2:1) (salt), 5-methyl-6-octyl-3,7-dihydro[1,2,4]triazolo[1,5-a]pyrimidin-7-amine, 5-ethyl-6-octyl-3,7-dihydro[1,2,4]triazolo[1,5-a]pyrimidin-7-amine, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2- {2-[({cyclopropyl[(4-methoxyphenyl)imino]methyl}thio)methyl]phenyl}-3-methoxyacrylate, methyl isothiocyanate, metrafenone, (5-bromo-2-methoxy-4-methylpyridin-3-yl)(2,3,4-trimethoxy-6-methylphenyl)methanone, mildiomycin, tolnifanide, N-(4-chlorobenzyl)-3-[3-methoxy-4-(prop-2-yn-1-yloxy)phenyl]propanamide, N-[(4-chlorophenyl)(cyano)-methyl]-3-[3-methoxy-4-(prop-2-yn-1-yloxy)phenyl]propanamide, N-[(5-bromo-3-chloro-pyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)-ethyl]-2-fluoro-4-iodopyridine-3-carboxamide, N- f (Z)-[(cyclopropylmethoxy)imino][6-(difluoromethoxy)-2,3-difluorophenyl]methyl}-2-phenylacetamide, N-{(E)-[(cyclopropyl-methoxy)imino][6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-N'-prop-2-yn-1-ylthiophene-2-sulfonohydrazide and zarilamid.

Compositions described herein can be combined with a fertilizer. Examples of fertilizers capable of being used with the compositions and methods described herein include, for example, urea, ammonium nitrate, ammonium sulfate, calcium nitrate, diammonium phosphate, monoammonium phosphate, triple super phosphate, potassium nitrate, potassium nitrate, nitrate of potash, potassium chloride, muriate of potash, di- and mono- potassium salts of phosphite/phosphonate and other NPK fertilizers such as 10-34-0, 6-24-6, or the like. The fertilizer compositions may also include micronutrients including Zn, Co, Mo, Mn, and the like.

The following examples serve to illustrate certain aspects of the disclosure

## EXAMPLES

**Example 1** - Fluopyram active ingredient - Comparative/Control

Polymeric crystal growth inhibitors were evaluated by suspending micronized fluopyram active ingredient crystal in water. As shown in FIG. 1 - top row, crystal growth was observed with control samples when exposed to accelerated aging at 54°C for 35 days, and then an additional two weeks under cycling conditions of 12 hours at -20°C, a 12-hour ramp up to 40°C, 12 hours at 40°C, and a 12-hour ramp down to -20°C). All three observation points (4 days, 35 days, then an additional 2 weeks of cycling) indicated severe needle-shaped crystal growth.

Reduced crystal growth was observed in the following samples that contained an additional inert - Rhodoline® 111 (at 3% w/w) (middle row) or HPMC (at 0.2% w/w) (bottom row) - as crystal growth inhibitors. In FIG. 1, the middle row displays the effect of inclusion of Rhodoline 111on crystal growth phenomenon, and the bottom row indicates the effect of inclusion of HPMC on crystal growth phenomenon during storage. All three observation points (4 days, 35 days, then an additional 2 weeks of cycling) indicated significantly reduced crystal growth, when compared to the control sample.

**Example 2** - Fluopyram formulations - Comparative/Control

Crystal growth was observed in the following fluopyram formulation.

| **Table 1: Fluopyram Formula A** | |
|---|---|
| Component | % w/w |
| Fluopyram | 48.39 |
| Non-ionic surfactants - Atlox™ 4913 and Atlox™ 4894 | 7.5 |
| Anionic surfactant | 0.5 |

(continued)

| Table 1: Fluopyram Formula A | |
|---|---|
| Component | % w/w |
| Antifreeze, antifoam, biocides, thickener | 8.46 |
| Water | 35.15 |

Atlox™ 4913 is a commonly used, commercially available polymeric surfactant, provided by Croda. Atlox™ is used and marketed as a crystal growth inhibitor (see, for example, www.crodacropcare.com/en-gb/products-and-applications/product-finder/product/215/Atlox_1_4913). However, despite being present in this formulation at a significant % w/w concentration, severe crystal growth nonetheless occurred. Particle size data, included in example 5 below, shows the extent of crystal growth. Atlox™ 4913 is an acrylic copolymer solution.

Atlox™ 4894 is a commonly used, commercially available nonionic proprietary surfactant blend, provided by Croda (see, for example, www.crodacropcare.com/en-gb/products-and-applications/product-finder/product/212/Atlox_1_4894). Croda recommends Atlox™ 4894 as a co-dispersant/wetting agent when used in combination with Atlox™ 4913.

**Example 3** - According to the Invention Fluopyram with polycarboxylic acid salt (Rhodoline® 111)

Reduced crystal growth was observed in the following fluopyram formulation, which contains Rhodoline® 111 as crystal growth inhibitor:

| Table 2: Fluopyram Formula B | |
|---|---|
| Component | % w/w |
| Fluopyram | 48.39 |
| Non-ionic surfactants - Atlox™ 4913 and Atlox™ 4894 | 7.50 |
| Anionic surfactant | 0.50 |
| Antifreeze, antifoam, biocides, thickener | 8.41 |
| Rhodoline® 111 (polycarboxylic acid salt) | 3.00 |
| Water | 32.20 |

Particle size data, included in example 5 below, shows the extent of crystal growth. The crystals observed in Formula B were smaller in size and did not become needle-like during the 34 day storage period at 54°C. Formula B was somewhat effective, as overall crystal growth was reduced. However, Formula B did eventually become a solid gel.

Thus, the combination of Atlox™ 4913 and Rhodoline 111 according to the invention marked an improvement over Formula A.

**Example 4** - According to the Invention Fluopyram with polycarboxylic acid and hydroxypropyl methylcellulose

Reduced crystal growth was observed in the following fluopyram formulation, which contains Geropon® T/36 (polycarboxylic acid) and 2% Agrimax (hydroxypropyl methylcellulose) as crystal growth inhibitors:

| Table 3: Fluopyram Formula C | |
|---|---|
| Component | %/ w/w |
| Fluopyram | 48.39 |
| Non-ionic surfactants - Atlox™ 4913 | 3.00 |
| Geropon® T/36 (polycarboxylic acid) | 1.00 |
| Antifreeze, antifoam, biocides, thickener, emulsifier, dispersant | 8.38 |
| 2% Agrimax (hydroxypropyl methylcellulose) | 0.60 |

(continued)

| Table 3: Fluopyram Formula C | |
|---|---|
| Component | %/ w/w |
| Water | 38.63 |

Particle size data, included in example 5 below, shows the extent of crystal growth. The crystals observed in Formula C were smaller in size than formula A and did not become needle-like during the 34 day storage period at 54°C. Formula C was very effective, as overall crystal growth was reduced and it remained flowable after 34 day storage period at 54°C.

**Example 5** - Particle Size Data and Physical Characteristics of Fluopyram Formulations Upon Aging

Particle (*i.e.,* crystal) size in compositions of Fluopyram Formulae A, B and C was measured at 10 days, 14 days, 18 days, and 34 days, while being aged at 54°C. Table 4 sets forth comparative data for size distribution with respect to D10, D50, and D90.

After 7 days, the control composition (Fluopyram Formula A) was gelled and after 18 days was totally gelled and solid.

After two weeks, the composition of Fluopyram Formula B, containing Rhodoline 111, was a thick, hard sediment. After 18 days, the composition of Fluopyram Formula B was totally gelled and solid. Compositions of Fluopyram Formula B exhibited crystal growth inhibition for the first two weeks. D10 size increased from 0.926 to only 0.947 microns. D50 increased from 2.4 to only 2.48 microns, and D90 increased from 7.46 to only 8.07 microns.

The composition of Fluopyram Formula C, containing polycarboxylic acid and hydroxypropyl methylcellulose, flowed freely for 34 days. Compositions of Fluopyram Formula C exhibited superior crystal growth inhibition for the entire 34-day period. D10 size increased from 0.873 to only 0.9 microns. D50 increased from 2.37 only 2.5 microns.

| **Table 4: Particle Size Data and Physical Characteristics of Fluopyram Formulations Upon Aging** | | | | | |
|---|---|---|---|---|---|
| | | **54°C 10 days** | **54°C 14 days** | **54°C 18 days** | **54°C 34 days** |
| **Fluopyram Formula A** | D90 | 15.6 microns | 21.5 | Totally gelled and solid | |
| | D50 | 2.84 | 6.2 | Totally gelled and solid | |
| | D10 | 0.85 | 1.39 | Totally gelled and solid | |
| | | | | | |
| **Fluopyram Formula B** | D90 | 7.46 | 8.07 | Totally gelled and solid | |
| | D50 | 2.4 | 2.48 | Totally gelled and solid | |
| | D10 | 0.926 | 0.947 | Totally gelled and solid | |
| | | | | | |
| **Fluopyram Formula C** | D90 | 6.14 | 6.32 | 6.35 | 6 |
| | D50 | 2.37 | 2.22 | 2.3 | 2.5 |
| | D10 | 0.873 | 0.889 | 0.894 | 0.9 |

Accordingly, superior crystal growth inhibition was observed in Fluopyram Formulae B and C. The composition of Fluopyram Formula B contained smaller crystals before eventually solidifying. The composition of Fluopyram Formula C contained even smaller crystals and remained freely flowing for the entire 34-day period.

**Example 6:** Examples Comprising Isoflucypram

The following Table 5 sets forth representative Isoflucypram Formulae A-C comprising isoflucypram as an active ingredient and varying amounts of Methocel E15 Premium. Formula A is a comparative example.

| Table 5 | | | |
|---|---|---|---|
| | Isoflucypram Formula A | Isoflucypram Formula B | Isoflucypram Formula C |
| Component | % w/w | %/ w/w | % w/w |
| Isoflucypram | 19.38 | 19.38 | 19.38 |
| Non-ionic surfactants - Atlox™ 4913 | 2.50 | 2.50 | 2.50 |
| Anionic surfactant | 2.50 | 2.50 | 2.50 |
| Antifreeze, antifoam, biocides, thickener, emulsifier, dispersant | 22.76 | 22.76 | 22.76 |
| Methocel E15 Premium (cellulose ether) | 0.00 | 0.04 | 0.50 |
| Water | 52.86 | 52.82 | 52.35 |

Methocel E15 Premium is a commercially available cellulose ether, provided by Dow Chemical Company.

**Example 7:** Wet Sieve Data for Isoflucypram Formulations Upon Aging

Particle (*i.e.*, crystal) size in compositions of Isoflucypram Formulae A, B and C was measured by wet sieve method at 0 days and at 7 days while being aged at 70°C. Table 6 sets forth comparative wet sieve data.

| **Table 6: Wet Sieve Data for Isoflucypram_Formulations Upon Aging** | | | |
|---|---|---|---|
| | **Crystal Size** | **Initial % w/w of Crystals** | **% w/w of Crystals After Aging at 70°C for 7 days** |
| **Isoflucypram Formula A (no cellulose ether)** | ≥150 microns | 0.001% | 0.0901% |
| | <150 microns and ≥45 microns | 0.0006% | 1.9077% |
| | <45 microns and ≥25 microns | 0.0029% | 0.1875% |
| | Total ≥25 microns | 0.0045% | 2.1853% |
| | | | |
| **Isoflucypram Formula B (0.04% w/w cellulose ether)** | ≥150 microns | 0.0008% | 0.0154% |
| | <150 microns and ≥45 microns | 0.0021% | 0.2198% |
| | <45 microns and ≥25 microns | 0.0027% | 0.0661% |
| | Total ≥25 microns | 0.0056% | 0.3013% |
| | | | |
| **Isoflucypram Formula C (0.50% w/w cellulose ether)** | ≥150 microns | 0.0003% | 0.0096% |
| | <150 microns and ≥45 microns | 0.0006% | 0.012% |

(continued)

| Table 6: Wet Sieve Data for Isoflucypram_Formulations Upon Aging | | | |
|---|---|---|---|
| | **Crystal Size** | **Initial % w/w of Crystals** | **% w/w of Crystals After Aging at 70°C for 7 days** |
| | <45 microns and ≥25 microns | 0.0012% | 0.0078% |
| | Total ≥25 microns | 0.0021% | 0.0294% |

After 7 days of aging at 70°C, Isoflucypram Formula A was found to consist by mass of 2.1853% of crystals of at least 25 microns, whereas Isoflucypram Formulae B and C contained only 0.3013% and 0.0294%, respectively. Accordingly, with increasing concentration of cellulose ether, a decrease in crystal size and aggregation was observed.

Not only was an overall decrease in crystal size and aggregation observed with increasing cellulose ether concentration, but a decrease in crystal aggregation was also observed across *each* of the measured ranges of (a) ≥150 microns, (b) <150 microns and ≥45 microns, and (c) <45 microns and ≥25 microns.

After a week of aging, Isoflucypram Formula A contained by mass 0.0901% of crystals ≥150 microns in size, whereas Isoflucypram Formulae B and C contained 0.0154% and 0.0096%, respectively.

Further, after a week of aging, Isoflucypram Formula A contained by mass 1.9077% of crystals <150 microns and ≥45 microns in size, whereas Isoflucypram Formulae B and C contained 0.2198% and 0.012%, respectively.

Still further, after a week of aging, Isoflucypram Formula A contained by mass 0.1875% of crystals <45 microns and ≥25 microns in size, whereas Isoflucypram Formulae B and C contained 0.0661% and 0.0078%, respectively.

**Example 7:** Examples Comprising Isoflucypram

The following Table 7 to 12 sets forth representative Isoflucypram formulations comprising Isoflucypram (ISY) as an active ingredient and varying amounts of cellulose ethers. Atlox™ 4913 is a non -ionic surfactant. Others ingredients comprises all other additional ingredients of the formulation such as antifreeze, antifoam, biocides, thickener, emulsifier, dispersant, or suspending aid. All values in tables 7 to 12 are provided in (% w/w).

Table 7

| | ISY | Atlox™ 4913 | Anionic surfactant | Others ingredients | Methocel A40M | Water |
|---|---|---|---|---|---|---|
| Formulation 7.0 | 19.38 | 2.50 | 2.50 | 22.76 | 0.00 | 52.86 |
| Formulation 7.1 | 19.38 | 2.50 | 2.50 | 22.76 | 0.005 | 52.855 |
| Formulation 7.2 | 19.38 | 2.50 | 2.50 | 22.76 | 0.01 | 52.85 |
| Formulation 7.3 | 19.38 | 2.50 | 2.50 | 22.76 | 0.025 | 52.835 |
| Formulation 7.4 | 19.38 | 2.50 | 2.50 | 22.76 | 0.05 | 52.81 |

Table 8

| | ISY | Atlox™ 4913 | Anionic surfactant | Others ingredients | Methocel K200M | Water |
|---|---|---|---|---|---|---|
| Formulation 8.0 | 19.38 | 2.50 | 2.50 | 22.76 | 0.00 | 52.86 |
| Formulation 8.1 | 19.38 | 2.50 | 2.50 | 22.76 | 0.005 | 52.855 |
| Formulation 8.2 | 19.38 | 2.50 | 2.50 | 22.76 | 0.01 | 52.85 |
| Formulation | 19.38 | 2.50 | 2.50 | 22.76 | 0.025 | 52.835 |
| 8.3 | | | | | | |
| Formulation 8.4 | 19.38 | 2.50 | 2.50 | 22.76 | 0.05 | 52.81 |

Table 9

| | ISY | Atlox™ 4913 | Anionic surfactant | Others ingredients | Methocel K100M | Water |
|---|---|---|---|---|---|---|
| Formulation 9.0 | 19.38 | 2.50 | 2.50 | 22.76 | 0.00 | 52.86 |

(continued)

| | ISY | Atlox™ 4913 | Anionic surfactant | Others ingredients | Methocel K100M | Water |
|---|---|---|---|---|---|---|
| Formulation 9.1 | 19.38 | 2.50 | 2.50 | 22.76 | 0.005 | 52.855 |
| Formulation 9.2 | 19.38 | 2.50 | 2.50 | 22.76 | 0.01 | 52.85 |
| Formulation 9.3 | 19.38 | 2.50 | 2.50 | 22.76 | 0.025 | 52.835 |
| Formulation 9.4 | 19.38 | 2.50 | 2.50 | 22.76 | 0.05 | 52.81 |

Table 10

| | ISY | Atlox™ 4913 | Anionic surfactant | Others ingredients | Methocel E15 Premium LV | Water |
|---|---|---|---|---|---|---|
| Formulation 10.0 | 19.38 | 2.50 | 2.50 | 22.76 | 0.00 | 52.86 |
| Formulation 10.1 | 19.38 | 2.50 | 2.50 | 22.76 | 0.005 | 52.855 |
| Formulation 10.2 | 19.38 | 2.50 | 2.50 | 22.76 | 0.01 | 52.85 |
| Formulation 10.3 | 19.38 | 2.50 | 2.50 | 22.76 | 0.025 | 52.835 |
| Formulation 10.4 | 19.38 | 2.50 | 2.50 | 22.76 | 0.05 | 52.81 |

Table 11

| | ISY | Atlox™ 4913 | Anionic surfactant | Others ingredients | Methocel K254 HPMC | Water |
|---|---|---|---|---|---|---|
| Formulation 11.0 | 19.38 | 2.50 | 2.50 | 22.76 | 0.00 | 52.86 |
| Formulation 11.1 | 19.38 | 2.50 | 2.50 | 22.76 | 0.005 | 52.855 |
| Formulation 11.2 | 19.38 | 2.50 | 2.50 | 22.76 | 0.01 | 52.85 |
| Formulation 11.3 | 19.38 | 2.50 | 2.50 | 22.76 | 0.025 | 52.835 |
| Formulation 11.4 | 19.38 | 2.50 | 2.50 | 22.76 | 0.05 | 52.81 |

Table 12

| | ISY | Atlox™ 4913 | Anionic surfactant | Others ingredients | Methocel K250M | Water |
|---|---|---|---|---|---|---|
| Formulation 12.0 | 19.38 | 2.50 | 2.50 | 22.76 | 0.00 | 52.86 |
| Formulation 12.1 | 19.38 | 2.50 | 2.50 | 22.76 | 0.005 | 52.855 |
| Formulation 12.2 | 19.38 | 2.50 | 2.50 | 22.76 | 0.01 | 52.85 |
| Formulation 12.3 | 19.38 | 2.50 | 2.50 | 22.76 | 0.025 | 52.835 |
| Formulation 12.4 | 19.38 | 2.50 | 2.50 | 22.76 | 0.05 | 52.81 |

Examples 8

The mode of the particle size was measured using laser diffraction particle size analysis to determine size distributions of the particle in these formulations. The mode represents in set of data that values which appears most often.

The mode of samples of the formulations were compared between samples stored at room temperature (RT) or 70 degree Celsius between 48 and 72 hours. In tables 13 to 18 the results for the mode of the particle size are shown for the formulations according to table 7 to 12.

Table 13

| | Methocel A40M (w/w %) | Storage temperature | Mode of particle size [micron] | Change in particle size [mode (70 degrees)/mode(RT (0.01 %)] |
|---|---|---|---|---|
| Formulation 7.0 | 0.00 | RT | 3.67 | |

(continued)

| | Methocel A40M (w/w %) | Storage temperature | Mode of particle size [micron] | Change in particle size [mode (70 degrees)/mode(RT (0.01 %)] |
|---|---|---|---|---|
| Formulation 7.0 | 0.00 | 70°C | 4.95 | 1.35 |
| Formulation 7.1 | 0.005 | 70°C | 6.85 | 1.38 |
| Formulation 7.2 | 0.01 | RT | 4.96 | |
| Formulation 7.2 | 0.01 | 70°C | 6.01 | 0.88 |
| Formulation 7.3 | 0.025 | 70°C | 5.85 | 0.97 |
| Formulation 7.4 | 0.05 | 70°C | 5.94 | 1.02 |

Table 14

| | Methocel K200M (w/w %) | Storage | Mode of particle size [micron] | Change in particle size [mode (70 degrees)/mode(RT)] |
|---|---|---|---|---|
| Formulation 8.0 | 0.00 | RT | 4.20 | |
| Formulation 8.0 | 0.00 | 70°C | 5.52 | 1.31 |
| Formulation 8.1 | 0.005 | 70°C | 6.12 | 1.27 |
| Formulation 8.2 | 0.01 | RT | 4.83 | |
| Formulation 8.2 | 0.01 | 70°C | 4.98 | 0.81 |
| Formulation 8.3 | 0.025 | 70°C | 5.76 | 1.16 |
| Formulation 8.4 | 0.05 | 70°C | 5.33 | 0.93 |

Table 15

| | Methocel K100M (w/w %) | Storage | Mode of particle size [micron] | Change in particle size [mode (70 degrees)/mode(RT)] |
|---|---|---|---|---|
| Formulation 9.0 | 0.00 | RT | 4.20 | |
| Formulation 9.0 | 0.00 | 70°C | 5.52 | 1.31 |
| Formulation 9.1 | 0.005 | 70°C | 5.54 | 1.28 |
| Formulation 9.2 | 0.01 | RT | 4.34 | |
| Formulation 9.2 | 0.01 | 70°C | 6.62 | 1.19 |
| Formulation 9.3 | 0.025 | 70°C | 6.42 | 0.97 |
| Formulation 9.4 | 0.05 | 70°C | 5.50 | 0.86 |

Table 16

| | Methocel E15 Premium LV (w/w %) | Storage | Mode of particle size [micron] | Change in particle size [mode (70 degrees)/mode(RT)] |
|---|---|---|---|---|
| Formulation 10.0 | 0.00 | RT | 4.20 | |
| Formulation 10.0 | 0.00 | 70°C | 5.52 | 1.31 |
| Formulation 10.1 | 0.005 | 70°C | 4.88 | 1.2 |
| Formulation 10.2 | 0.01 | RT | 4.08 | |
| Formulation 10.2 | 0.01 | 70°C | 3.48 | 0.71 |
| Formulation 10.3 | 0.025 | 70°C | 3.90 | 1.12 |
| Formulation 10.4 | 0.05 | 70°C | 4.60 | 1.18 |

Table 17

| | K254HPMC (w/w %) | Storage | Mode of particle size [micron] | Change in particle size [mode (70 degrees)/mode(RT)] |
|---|---|---|---|---|
| Formulation 11.0 | 0.00 | RT | 3.67 | |
| Formulation 11.0 | 0.00 | 70°C | 4.95 | 1.35 |
| Formulation 11.1 | 0.005 | 70°C | 5.56 | 0.89 |
| Formulation 11.2 | 0.01 | RT | 6.28 | |
| Formulation 11.2 | 0.01 | 70°C | 5.55 | 1.00 |
| Formulation 11.3 | 0.025 | 70°C | 5.34 | 0.96 |
| Formulation | 0.05 | 70°C | 7.88 | 1.48 |
| 11.4 | | | | |

Table 18

| | Methocel K250M (w/w %) | Storage | Mode of particle size [micron] | Change in particle size [mode (70 degrees)/mode(RT)] |
|---|---|---|---|---|
| Formulation 12.0 | 0.00 | RT | 3.67 | |
| Formulation 12.0 | 0.00 | 70°C | 4.95 | 1.35 |
| Formulation 12.1 | 0.005 | 70°C | 4.91 | 0.97 |
| Formulation 12.2 | 0.01 | RT | 5.08 | |
| Formulation 12.2 | 0.01 | 70°C | 5.44 | 1.11 |
| Formulation 12.3 | 0.025 | 70°C | 7.10 | 1.31 |
| Formulation 12.4 | 0.05 | 70°C | 5.00 | 0.70 |

Methocel A40 M is a commercially available methyl cellulose ether which has a viscosity of 40 000 cP (centipoise) as a 2% (w/w) aequous solution, provided by Dow Chemical Company. Methocel K200 M is a commercially available hydroxypropyl cellulose ether which has a viscosity of 200 000 cP (centipoise) as a 2% (w/w) aequous solution, provided by Dow Chemical Company. Methocel K200 M is a commercially available hydroxypropyl cellulose ether which has a viscosity of 200 000 cP (centipoise) as a 2% (w/w) aequous solution, provided by Dow Chemical Company. Methocel K250 M is a commercially available hydroxypropyl cellulose ether which has a viscosity of 250 000 cP (centipoise) as a 2% (w/w) aequous solution, provided by Dow Chemical Company. Methocel E15 Premium LV is a commercially available hydroxypropylmethyl cellulose ether which has a viscosity of 15 cP (centipoise) as a 2% (w/w) aequous solution, provided by Dow Chemical Company. Methocel Methocel E3 Premium LV is a commercially available hydroxypropylmethyl cellulose ether which has a viscosity of 3 cP (centipoise) as a 2% (w/w) aequous solution, provided by Dow Chemical Company. Methocel K254 HPMC is a commercially available hydroxypropylmethyl cellulose ether which has a viscosity of 254 000 cP (centipoise) as a 2% (w/w) aqueous solution, provided by Dow Chemical Company. Methocel A15 C is a commercially available methyl cellulose ether which has a viscosity of 1500 cP (centipoise) as a 2% (w/w) aequous solution, provided by Dow Chemical Company. A4 M is a commercially available methyl cellulose ether which has a viscosity of 4000 cP (centipoise) as a 2% (w/w) aequous solution, provided by Dow Chemical Company. Methocel Methocel E50 Premium LV is a commercially available hydroxypropylmethyl cellulose ether which has a viscosity of 50 cP (centipoise) as a 2% (w/w) aequous solution, provided by Dow Chemical Company. Methocel E4M is a commercially available hydroxypropylmethyl cellulose ether which has a viscosity of 4000 cP (centipoise) as a 2% (w/w) aequous solution, provided by Dow Chemical Company. Methocel A4M is a commercially available hydroxypropylmethyl cellulose ether which has a viscosity of 4000 cP (centipoise) as a 2% (w/w) aequous solution, provided by Dow Chemical Company. Walocel CRT 100 PA is a commercially available sodium carboxymethyl cellulose which has a viscosity of 100 cP (centipoise) as a 2% (w/w) aequous solution, provided by Dow Chemical Company. Walocel CRT 1000 PA is a commercially available sodium carboxymethyl cellulose which has a viscosity of 1000 cP (centipoise) as a 2% (w/w) aequous solution, provided by Dow Chemical Company. Walocel CRT 10000 PA is a commercially available sodium carboxymethyl cellulose which has a viscosity of 10000 cP (centipoise) as a 2% (w/w) aequous solution, provided by Dow Chemical Company.

Example 8

The following table 19 to 20 sets forth representative Isoflucypram formulations comprising Isoflucypram (ISY) as an active ingredient and varying amounts of cellulose ethers. Atlox™ 4913 is a non -ionic surfactant. Others ingredients comprises all other additional ingredients of the formulation such as antifreeze, antifoam, biocides, thickener, emulsifier, dispersant, ionic surfactant or suspending aid are kept at the same concentration, water is added in the respective concentration to add up to 100 %. All values in tables 19 and 20 are provided in (% w/w).

Table 19

| | ISY | Atlox™ 4913 | Methocel A15 LV | Methocel A15C | Methocel A4M | Methocel E3 Premium LV | Methocel E15 Premium LV |
|---|---|---|---|---|---|---|---|
| Formulation 13.1 | 19.38 | 2.50 | 0.2 | - | - | - | - |
| Formulation 13.2 | 19.38 | 2.50 | 0.5 | - | - | - | - |
| Formulation 13.3 | 19.38 | 2.50 | - | 0.2 | - | - | - |
| Formulation 13.4 | 19.38 | 2.50 | - | 0.5 | - | - | - |
| Formulation 13.5 | 19.38 | 2.50 | - | - | 0.2 | - | - |
| Formulation 13.6 | 19.38 | 2.50 | - | - | 0.5 | - | - |
| Formulation 13.7 | 19.38 | 2.50 | - | - | - | 0.2 | - |
| Formulation 13.8 | 19.38 | 2.50 | - | - | - | 0.5 | - |
| Formulation 13.9 | 19.38 | 2.50 | - | - | - | - | 0.2 |
| Formulation 13.10 | 19.38 | 2.50 | - | - | - | - | 0.5 |

Table 20

| | ISY | Atlox™ 4913 | Methocel E50 Premium LV | Methocel E4M | Walocel CRT 100 PA | Walocel CRT 1000 PA | Walocel CRT 10000 PA |
|---|---|---|---|---|---|---|---|
| Formulation 13.11 | 19.38 | 2.50 | 0.2 | - | - | - | - |
| Formulation 13.12 | 19.38 | 2.50 | 0.5 | - | - | - | - |
| Formulation 13.13 | 19.38 | 2.50 | - | 0.2 | - | - | - |
| Formulation 13.14 | 19.38 | 2.50 | - | 0.3 | - | - | - |
| Formulation 13.15 | 19.38 | 2.50 | - | - | 0.2 | - | - |
| Formulation 13.16 | 19.38 | 2.50 | - | - | 0.5 | - | - |
| Formulation 13.17 | 19.38 | 2.50 | - | - | - | 0.2 | - |
| Formulation 13.18 | 19.38 | 2.50 | - | - | - | 0.5 | - |
| Formulation 13.19 | 19.38 | 2.50 | - | - | - | - | 0.2 |
| Formulation 13.20 | 19.38 | 2.50 | - | - | - | - | 0.5 |

Example 9

Two parameters were determined for the formulations 13.1 to 13.20:
The first parameter is the particle size difference between the formulation stored between 48 hours and 72 hours at room temperature compared to 70 degree Celsius at the 90 percentile. The second parameter is the percentile where the particle size difference is bigger than 4 microns. The experiments were performed in two replicates.

Table 20

| | Replicate 1 | Replicate 1 | Replicate 2 | Replicate 2 |
|---|---|---|---|---|
| | 90 % < | % >4 microns | 90 % < | % >4 microns |
| Formulation 13.1 | 0.82 | 5.0 | 1.86 | 8.0 |
| Formulation 13.2 | 3.68 | 12.9 | 3.00 | 7.7 |
| Formulation 13.3 | 3.68 | 12.9 | 3.00 | 7.7 |
| Formulation 13.4 | 2.43 | 13.4 | - | - |
| Formulation 13.5 | 3.08 | 9.5 | 1.78 | 0.1 |
| Formulation 13.6 | 1.86 | 14.3 | 0.5 | -0.8 |
| Formulation 13.7 | -0.87 | 16.2 | 0.96 | 5.4 |
| Formulation 13.8 | 0.07 | 0.5 | 0.05 | 0.3 |
| Formulation 13.9 | 0.39 | 2.2 | 0.29 | 1.5 |
| Formulation 13.10 | -0.04 | -0.2 | -0.01 | -0.2 |

Table 21

| | Replicate 1 | Replicate 1 | Replicate 2 | Replicate 2 |
|---|---|---|---|---|
| | 90 % < | % >4 microns | 90 % < | % >4 microns |
| Formulation 13.11 | 0.29 | 1.9 | - | - |
| Formulation 13.12 | 0.0 | 0.4 | - | - |
| Formulation 13.13 | 0.95 | 9.8 | 0.11 | 0.6 |
| Formulation 13.14 | 0.59 | 6.5 | - | - |
| Formulation 13.15 | 3.24 | 12.7 | - | - |
| Formulation 13.16 | 3.23 | 12.7 | - | - |
| Formulation 13.17 | 3.25 | 12.9 | - | - |
| Formulation 13.18 | 3.22 | 12.6 | - | - |
| Formulation 13.19 | 3.31 | 13.6 | - | - |
| Formulation 13.20 | 2.62 | 12.6 | 2.93 | 11.1 |

## Claims

**1.** An agrochemical composition comprising:

a) at least one succinate dehydrogenase inhibitor, selected from a group comprising fluopyram and isoflucypram; and
b) at least one polymeric crystal growth inhibitor that inhibits crystal growth of the succinate dehydrogenase inhibitor, wherein the at least one polymeric crystal growth inhibitor is a cellulose ether.

**2.** The composition according to claim 1, wherein the at least one succinate dehydrogenase inhibitor is fluopyram.

**3.** The composition according to claim 1, wherein the at least one succinate dehydrogenase inhibitor is isoflucypram.

**4.** The composition according to any of claims 1-3, wherein the at least one polymeric crystal growth inhibitor comprises both a cellulose ether and a polycarboxylate.

**5.** The composition according to claim 4, wherein the cellulose ether is hydroxypropyl methylcellulose.

6. The composition according to any of claims 1-5, further comprising a bacterium of the genus *Bacillus.*

7. The composition according to any of claims 1-5, further comprising a *Bacillus firmus, Bacillus subtilis, Bacillus thuringiensis,* and/or gram-negative bacteria.

8. The composition according to any of claims 1-7, wherein the a) at least one succinate dehydrogenase inhibitor and the b) at least one polymeric crystal growth inhibitor are present in a weight ratio of from 1:1000 to 1000:1.

9. The composition according to any of claims 1-8, wherein the at least one succinate dehydrogenase inhibitor is present at a w/w concentration of 1% to 99%, based on the total weight of the composition.

10. The composition according to any of claims 1-8, wherein the at least one succinate dehydrogenase inhibitor is present at a w/w concentration of 5% to 80%, based on the total weight of the composition.

11. The composition according to any of claims 1-10, wherein the at least one polymeric crystal growth inhibitor is present at a w/w concentration of 0.001% to 33%, based on the total weight of the composition.

12. The composition according to any of claims 1-10, wherein the at least one polymeric crystal growth inhibitor is present at a w/w concentration of 0.005% to 20%, based on the total weight of the composition.

13. The composition according to any of claims 1-12, further comprising one or more additional pesticidal compounds selected from the group consisting of herbicides, fungicides, nematicides, insecticides, bactericides, and acaricides.

14. A method of controlling or reducing pests, optionally fungal spores or nematodes, in a plant comprising applying to a plant or habitat thereof the composition according to any of claims 1-13.

15. The method according to claim 14, wherein the composition is applied at a rate of 0.1 to 10,000 g ai/ha.

16. A method of controlling crystal growth in a succinate dehydrogenase inhibitor comprising adding a cellulose ether to a composition comprising a succinate dehydrogenase inhibitor selected from a group comprising fluopyram and isoflucypram.

17. Use of a composition comprising at least one succinate dehydrogenase inhibitor selected from a group comprising fluopyram and isoflucypram and at least one polymeric crystal growth inhibitor to control or reduce fungal spores and/or nematode infestation in a plant or crop, wherein the at least one polymeric crystal growth inhibitor is a cellulose ether.

## Patentansprüche

1. Agrochemische Zusammensetzung umfassend:

   a) mindestens einen Succinat-Dehydrogenase-Inhibitor, ausgewählt aus einer Gruppe, umfassend Fluopyram und Isoflucypram ; und
   b) mindestens einen polymeren Kristallwachstumsinhibitor, der das Kristallwachstum des Succinat-Dehydrogenase-Inhibitors hemmt, wobei der mindestens eine polymere Kristallwachstumsinhibitor ein Celluloseether ist.

2. Die Zusammensetzung gemäß Anspruch 1, wobei der mindestens eine Succinat-Dehydrogenase-Inhibitor Fluopyram ist.

3. Die Zusammensetzung gemäß Anspruch 1, wobei der mindestens eine Succinat-Dehydrogenase-Inhibitor Isoflucypram ist.

4. Die Zusammensetzung gemäß einem der Ansprüche 1-3, wobei der mindestens eine polymere Kristallwachstumsinhibitor sowohl einen Celluloseether als auch ein Polycarboxylat umfasst.

5. Die Zusammensetzung gemäß Anspruch 4, wobei der Celluloseether Hydroxypropylmethylcellulose ist.

6. Die Zusammensetzung gemäß einem der Ansprüche 1-5, ferner umfassend ein Bakterium der Gattung *Bacillus.*

7. Die Zusammensetzung gemäß einem der Ansprüche 1-5, ferner umfassend *Bacillus firmus, Bacillus subtilis, Bacillus thuringiensis* und/oder gramnegative Bakterien.

8. Die Zusammensetzung gemäß einem der Ansprüche 1-7, wobei a) mindestens ein Succinat-Dehydrogenase-Inhibitor und b) mindestens ein polymerer Kristallwachstumsinhibitor in einem Gewichtsverhältnis von 1:1000 bis 1000:1 vorhanden sind.

9. Die Zusammensetzung gemäß einem der Ansprüche 1-8, wobei der mindestens eine Succinat-Dehydrogenase-Inhibitor in einer w/w-Konzentration von 1% bis 99%, bezogen auf das Gesamtgewicht der Zusammensetzung, vorhanden ist.

10. Die Zusammensetzung gemäß einem der Ansprüche 1-8, wobei der mindestens eine Succinat-Dehydrogenase-Inhibitor in einer w/w-Konzentration von 5% bis 80%, bezogen auf das Gesamtgewicht der Zusammensetzung, vorhanden ist.

11. Die Zusammensetzung gemäß einem der Ansprüche 1-10, wobei der mindestens eine polymere Kristallwachstumsinhibitor in einer w/w-Konzentration von 0,001% bis 33%, bezogen auf das Gesamtgewicht der Zusammensetzung, vorhanden ist.

12. Die Zusammensetzung gemäß einem der Ansprüche 1-10, wobei der mindestens eine polymere Kristallwachstumsinhibitor in einer w/w-Konzentration von 0,005% bis 20%, bezogen auf das Gesamtgewicht der Zusammensetzung, vorhanden ist.

13. Die Zusammensetzung gemäß einem der Ansprüche 1-12, ferner umfassend eine oder mehrere zusätzliche pestizide Verbindungen, ausgewählt aus der Gruppe bestehend aus Herbiziden, Fungiziden, Nematiziden, Insektiziden, Bakteriziden und Akariziden.

14. Verfahren zur Bekämpfung oder Reduzierung von Schädlingen, gegebenenfalls Pilzsporen oder Nematoden, in einer Pflanze, umfassend die Anwendun der Zusammensetzung gemäß einem der Ansprüche 1-13 auf eine Pflanze oder deren Lebensraum.

15. Verfahren gemäß Anspruch 14, wobei die Zusammensetzung in einer Menge von 0,1 bis 10.000 g ai/ha angewendet wird.

16. Verfahren zur Kontrolle des Kristallwachstums in einem Succinat-Dehydrogenase-Inhibitor, umfassend das Zugeben eines Celluloseethers zu einer Zusammensetzung, die einen Succinat-Dehydrogenase-Inhibitor, ausgewählt aus einer Gruppe umfassend Fluopyram und Isoflucypram enthält.

17. Verwendung einer Zusammensetzung, umfassend mindestens einen Succinat-Dehydrogenase-Inhibitor, ausgewählt aus einer Gruppe umfassend Fluopyram und Isoflucypram sowi mindestens einen polymeren Kristallwachstumsinhibitor, zur Bekämpfung oder Reduzierung von Pilzsporen und/oder Nematodenbefall in einer Pflanze oder Ernte, wobei der mindestens eine polymere Kristallwachstumsinhibitor ein Celluloseether ist.

## Revendications

1. Composition agrochimique comprenant :

   a) au moins un inhibiteur de la succinate déshydrogénase, sélectionné dans un groupe comprenant le fluopyram et l'isoflucypram ; et
   b) au moins un inhibiteur polymérique de la croissance cristalline inhibant la croissance cristalline de l'inhibiteur de la succinate déshydrogénase, dans lequel ledit au moins un inhibiteur polymérique de la croissance cristalline est un éther de cellulose.

2. Composition selon la revendication 1, dans laquelle ledit au moins un inhibiteur de la succinate déshydrogénase est le fluopyram.

3. Composition selon la revendication 1, dans laquelle ledit au moins un inhibiteur de la succinate déshydrogénase est l'isoflucypram.

4. Composition selon l'une des revendications 1 à 3, dans laquelle ledit au moins un inhibiteur polymérique de la croissance cristalline comprend à la fois un éther de cellulose et un polycarboxylate.

5. Composition selon la revendication 4, dans laquelle ledit éther de cellulose est une hydroxypropylméthylcellulose.

6. Composition selon l'une des revendications 1 à 5, comprenant en outre une bactérie du genre *Bacillus.*

7. Composition selon l'une des revendications 1 à 5, comprenant en outre un *Bacillus firmus,* un *Bacillus subtilis,* un *Bacillus thuringiensis,* et/ou des bactéries à Gram négatif.

8. Composition selon l'une des revendications 1 à 7, dans laquelle a) ledit au moins un inhibiteur de la succinate déshydrogénase et b) ledit au moins un inhibiteur polymérique de la croissance cristalline sont présents dans un rapport en poids de 1:1000 à 1000:1.

9. Composition selon l'une des revendications 1 à 8, dans laquelle ledit au moins un inhibiteur de la succinate déshydrogénase est présent à une concentration en poids de 1 % à 99 %, sur la base du poids total de la composition.

10. Composition selon l'une des revendications 1 à 8, dans laquelle ledit au moins un inhibiteur de la succinate déshydrogénase est présent à une concentration en poids de 5 % à 80 %, sur la base du poids total de la composition.

11. Composition selon l'une des revendications 1 à 10, dans laquelle ledit au moins un inhibiteur polymérique de la croissance cristalline est présent à une concentration en poids de 0,001 % à 33 %, sur la base du poids total de la composition.

12. Composition selon l'une des revendications 1 à 10, dans laquelle ledit au moins un inhibiteur polymérique de la croissance cristalline est présent à une concentration en poids de 0,005 % à 20 %, sur la base du poids total de la composition.

13. Composition selon l'une des revendications 1 à 12, comprenant en outre un ou plusieurs composés pesticides supplémentaires sélectionnés dans le groupe constitué d'herbicides, de fongicides, de nématicides, d'insecticides, de bactéricides et d'acaricides.

14. Procédé de lutte ou de réduction des nuisibles, éventuellement des spores fongiques ou des nématodes, dans une plante, comprenant l'application à une plante ou à son habitat de la composition selon l'une des revendications 1 à 13.

15. Procédé selon la revendication 14, dans lequel la composition est appliquée à un taux de 0,1 à 10 000 g ia/ha.

16. Procédé de contrôle de la croissance cristalline dans un inhibiteur de la succinate déshydrogénase, comprenant l'ajout d'un éther de cellulose à une composition comprenant un inhibiteur de la succinate déshydrogénase sélectionné dans un groupe comprenant le fluopyram et l'isoflucypram.

17. Utilisation d'une composition comprenant au moins un inhibiteur de la succinate déshydrogénase sélectionné dans un groupe comprenant le fluopyram et l'isoflucypram et au moins un inhibiteur polymérique de la croissance cristalline pour lutter contre ou réduire les spores fongiques et/ou l'infestation de nématodes dans une plante ou une culture, dans laquelle ledit au moins un inhibiteur polymérique de la croissance cristalline est un éther de cellulose.

FIG. 1

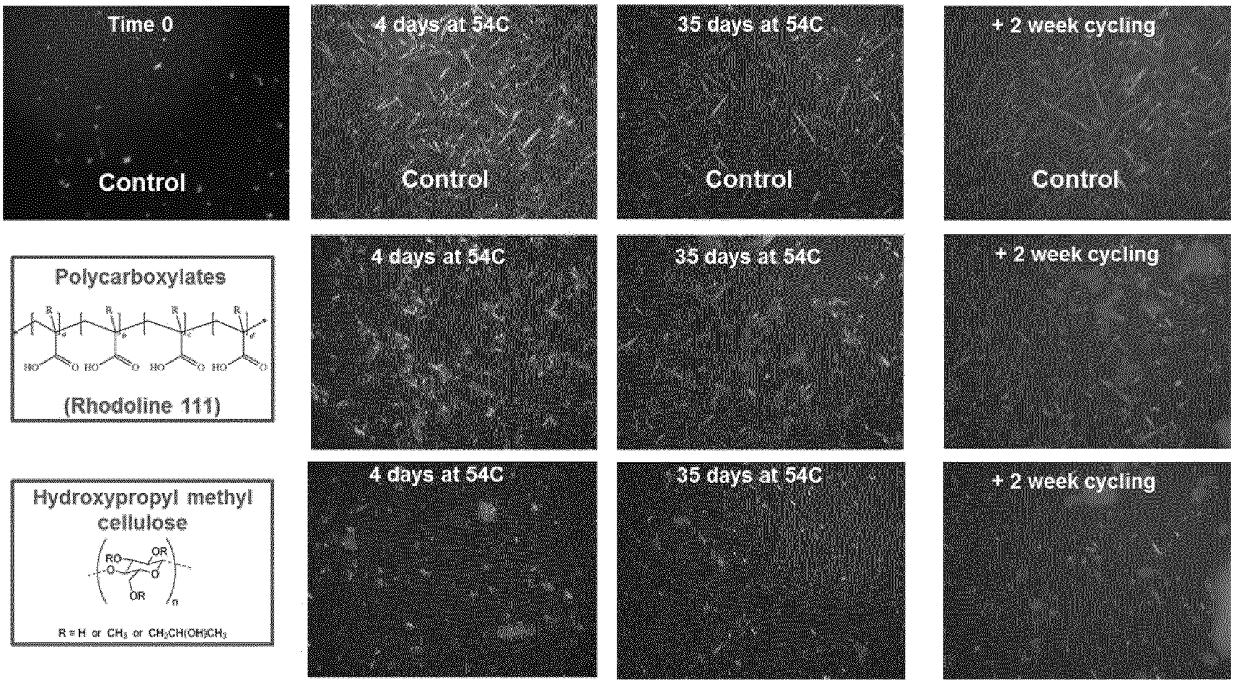
Time 0
Control
4 days at 54C
Control
35 days at 54C
Control
+ 2 week cycling
Control
Polycarboxylates
(Rhodoline 111)
4 days at 54C
35 days at 54C
+ 2 week cycling
Hydroxypropyl methyl cellulose
R = H or CH3 or CH2CH(OH)CH3
4 days at 54C
35 days at 54C
+ 2 week cycling

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3292759 A
- WO 9530661 A
- EP 303153 A
- WO 9637494 A
- WO 9825923 A


### Non-patent literature cited in the description


- **LIFSHITZ, I.M.** ; **SLYOZOV, V.V.** The Kinetics of Precipitation from Supersaturated Solid Solutions. *Journal of Physics and Chemistry of Solids.*, 1961, vol. 19 (1-2), 35-50
- **BALDAN, A**. Review Progress in Ostwald ripening theories and their applications to nickel-base superalloys Part I: Ostwald ripening theories. *Journal of Materials Science*, 2002, vol. 37 (11), 2171-2202
- **MCCUTCHEON'S**. Emulsifiers & Detergents, McCutcheon's Directories. Glen Rock, 2008, vol. 1
- Bergey's Manual of Systematic Bacteriology. 1986